# EUROPEAN PATENT SPECIFICATION

(11) **EP 1 749 631 B1**
(45) Date of publication and mention of the grant of the patent: **21.02.2018**
(21) Application number: 06015128.9
(22) Date of filing: 20.07.2006
(51) Int. Cl.: B29B 11/16, C09J 4/00, B29C 70/34, B29C 70/38, B29C 70/54

(54) **Method for making three-dimensional preforms using anaerobic binders**
Verfahren zur Herstellung anaerob gebundenen 3-Dimensionalen Vorformen
Méthode de fabrication de préformes tridimensionnelles en utilisant des liants anaérobies

(30) Priority: 01.08.2005 US 194835
(43) Date of publication of application: 07.02.2007
(73) Proprietor: American GFM Corporation, Chesapeake VA 23323 (US)
(72) Inventor: Buckley, Daniel T., Shrewsbury, VT 05738 (US)
(74) Representative: Babeluk, Michael

(56) References cited:
- EP-A1- 0 558 366
- US-A- 5 192 387
- US-A- 5 217 654
- US-A- 5 827 392
- "Loctite Laboratory Data Sheet Product 3416"[Online] December 2000 (2000-12), pages 1-2, XP002408474 Retrieved from the Internet: URL:http://tds.loctite.com/tds5/docs/3416- EN.PDF> [retrieved on 2006-11-21]
- "Loctite Laboratory Data Sheet Product 3415"[Online] December 2000 (2000-12), pages 1-2, XP002408475 Retrieved from the Internet: URL:http://tds.loctite.com/tds5/docs/3415- EN.PDF> [retrieved on 2006-11-21]
- D. Buckley: "New Preforming Method and binder for Liquid Molding Processing", , 19 December 2001 (2001-12-19), Retrieved from the Internet: URL:http://www.temp.speautomotive.com/SPEA _CD/SPEA2001/d.htm [retrieved on 2009-12-09]

## Description

The present invention is related methods of making a preform for fiber-reinforced molded articles. Documents EP 0558 366 A1, US 5827392, US 5217654, US 5 192 387 disclose several methods of making fiber preforms. The publication "New preforming method and binder for carbon fiber and fiberglass liquid molding processing" , by Daniel T. Buckley (Automotive Composites Conference, 2001) disclose the advantages and inconvenients of using anaerobic binders for making fiber preforms. In making directed fiber preforms, it has heretofore been the practice to spray chopped fibers with a thermally-curable or thermally meltable binder resin onto a form that has air pulled therethrough to locate and hold the fibers. The form with the fibers and the binder resin is then heated or heated and cooled, rotated into a hot air plenum chamber, dried/cooled or cured to set the binder resin. This thermal curing process requires a great deal of energy, time and storage space for drying and curing the preforms. Improved methods based on the use of electromagnetic radiation-curable binders (" light-curable binders ") have been developed in U.S. Pats. Nos. 6,001,300, 6,004,123 and 5,866,060. Such techniques allow for more energy and time-efficient production of preforms by using the radiation-curable binders. Such binders are cured by applying directed energy, for instance ultraviolet or microwave radiation, thus dispensing with the need for large, continuously operating ovens for curing the binder.

The applicability of the techniques is however limited when materials impervious to electromagnetic radiation are to be incorporated in the preform, for example core materials such as honeycomb or foam. Certain fiber materials, such as Aramid, are also a challenge, because they effectively screen the light wavelengths that cure currently available light-curable binders.

The challenge is greater yet with materials such as carbon fiber materials, which block the access of radiation of any frequency in a range that is commercially available or practical at this time. A reinforcement layer of carbon fiber material can thus be added to a preform if such a layer is on the light application side, and if the layers containing light-curable binders have already been cured in a previous curing step or if the carbon fiber is held in place and shape by subsequent layers of fiberglass added and cured over the carbon fiber. The inclusion of more than one carbon fiber layers will necessitate a separate light-curing step for each of the layers containing light-curable binders that will be among the carbon fiber layers. Preforms of carbon fibers alone cannot be made because the light will not penetrate multiple carbon fiber layers.

The above problems are solved by a method of making a preform of fiber reinforced molded articles according to claim 1. Further solutions are defined by a method of manufacturing a preform according to claim 38. Further solutions are available by methods of making a preform according to claim 53 or 66. Further embodiments are set forth in the dependent claims.

### BRIEF DESCRIPTION OF THE DRAWINGS

The skilled artisan will understand that the drawings, described below, are for illustration purposes only. The drawings are not intended to limit the scope of the invention in any way.
FIGURE 1 illustrates the flow chart of a typical process for practicing some embodiments of the invention.
FIGURE 2 illustrates a process using robots for handling the material between processing stations.
FIGURE 3 illustrates a process for making rigid three-dimensional preforms with the energetic basting techniques.
FIGURE 4 illustrates a binder application stage and a binder compaction stage.
FIGURE 5 illustrates an energetic basting station.
FIGURE 6 illustrates fiber optic wands or lasers for curing binders.
FIGURE 7 illustrates a bound structure.
FIGURE 8 illustrates a cutting stage.
FIGURE 9 illustrates the placing of a cut blank into a shaping mold.
FIGURE 10 illustrates a blank inside a closed mold.
FIGURE 11 illustrates a shaped element subjected to an atmosphere promoting the curing of anaerobic binders, optionally to electromagnetic radiation, and optionally to heat.
FIGURE 12 illustrates the preform ready to be removed from the mold.
FIGURE 13 illustrates an energetic stitching procedure.
FIGURE 14 illustrates an energetic stitching procedure.
FIGURE 15 illustrates an energetic stitching procedure.
FIGURE 16 illustrates an energetic stitching procedure.
FIGURE 17 illustrates an energetic stitching procedure.
FIGURE 18 illustrates a mat forming system including two stage binder with 1^{st} stage cure.
FIGURE 19 illustrates the flow chart of a molding process.
FIGURE 20 is a process flow chart for making a structural composite utilizing directed fiber, directed energy techniques.
FIGURE 21 illustrates an apparatus for manufacturing a preform.
FIGURE 22 illustrates an apparatus for energetic stitching onto a preform.
FIGURE 23 illustrates a process and apparatus for depositing fibers and binder directly on a mold portion.

### DESCRIPTION OF VARIOUS EMBODIMENTS

The present teachings provide new methods for manufacturing preforms, wherein the binder resin is an anaerobic binder. With these anaerobic methods preforms can be produced to any thickness where light curing would have to be used in several steps, or where light curing would not work such as with carbon fibers and with any medium that blocks light such as certain types of core materials. Since anaerobic curing is not directional, the materials, with the binder in place, can be assembled in the desired organization (laminate schedule) to any thickness and the preform is stabilized by applying an atmosphere promoting the curing of the anaerobic binder.

For example, a preform can now be produced in one step with combinations of many layers of carbon fiber, glass fibers, core materials, and metal inserts where the carbon, core materials and metal inserts would block the application of light, thus requiring more than one light-curing step, and where these materials would also create unmanageable conditions for a thermal cure system (these materials having widely different coefficients of thermal conductivity) and for a thermoplastic system because there is no reasonable way to heat, form and stabilize while assembling the laminate constituents. Structural reinforcements, sub-assemblies and the like may be applied to the preform to enhance the final properties of the final composite structure. Ribs, closed sections, cores, encapsulations of metal, foam, wood or other materials may be included in the design of preforms.

According to the present invention, a process is designed for high speed, high-volume output of rigidized composite forms that will allow unlimited geometric configurations and detailed assemblies utilizing a wide variety of reinforcement materials. Along with numerous fiber reinforcement materials, components such as structural foam, of any variety of core materials, wood or metal can be utilized to achieve any shape or structure.

The process of the present invention utilizes specifically developed anaerobic binders along with atmospheres that promote the curing of such binders for rigidizing the composite form. Such atmospheres may be, according to the invention, mixtures of one or more inert gases. In a further embodiment, which does not form part of the present invention,vacuum may be used. Structural components may be added to the preforms through energetic stitching techniques. The process capabilities and binder systems apply to and are compatible with any resins used in any liquid composite process such as RTM and RIM resin systems, i.e. polyesters, vinyl esters, urethanes, epoxies, phenolics and acrylates. The process is particularly applicable to opaque and partially opaque materials such as carbon fibers and aramid fibers.

The process of the present invention is designed to be fully automated and to enable specific distribution and placement of numerous types of reinforcements, where necessary, for the required structural properties of a preform. Complete freedom of design is therefore inherent in the process and allows for the most desirable reinforcement type and/or structures including closed structural shapes and varied wall sections to meet design criteria. The process of rigidizing and/or attaching component structures can be incremented and tailored to the cycle time of the molding machine or supply a variety or plurality of the preforms to more than one molding machine.

Automation of the process is designed to make full use of statistical processing techniques to produce preforms of repeatable, consistent quality and structural integrity. Application of the process technology can be integrated into a wide variety of product areas such as transportation, marine, aircraft, aerospace, defense and sporting, and in consumer goods.

As will be set forth in detail below, engineered polymer resin chemistry along with controlled atmosphere systems are used in conjunction with specially designed automation machines for the manufacturing of structural carrier preforms. The preforms can be tailored for specific structural and size requirements necessary for liquid composite molding processes and components.

Major problems with placement of reinforcements during preforming and molding can be overcome by combining and rigidizing various reinforcement materials to conform to any complex shape desired. According to a feature of the invention, the utilization of other reinforcement materials can be consolidated with the preform structure by addition of stiffeners or ribbing and encapsulation of core materials along with inserts can be achieved where reinforcement for structural as well as class A applications are required.

In practicing the invention, mats or fabrics (or combinations thereof, collectively referred to as materials) of fiber-containing reinforcement material are precut to conforming shapes as blanks, anaerobic binder is applied and each blank is then transferred into a specifically engineered mold set that replicates the shape of a part. An atmosphere promoting curing of the binder is applied, in turn rigidizing the preform. When the atmosphere is discontinued, the mold sets are opened and the preform is transferred to a molding station or to an optional energetic stitching station or to a net shape cutting station.

The preformable materials are cut into predetermined patterns that allow it to conform to the contours of the forming mold. The preformable material is permeated on either side with the binder resin. Single or multiple layers of materials are sandwiched together to create the carrier preform loading. Carrier preform is a term coined by the C. A. Lawton Company in U.S. Pat. No. 6,001,300 to describe a preform in a process that will be used as a subassembly or have more material subsequently attached thereto by energetic stitching to create the final assembly. Energetic stitching is a term coined by the C. A. Lawton Company to describe the method of placing and attaching structures to a basic preform. The binder is anaerobic and is metered into the applicator system. The binder generally includes one or more resins, one or more monomers, one or more hydroperoxides, one or more initiators and one or more inhibitors. An example binder includes 15% to 55% by weight of a resin such as epoxymethacrylate and 45% to 85% by weight of monomers such as methacrylate monomers, polyhydric alcohols and ester alcohols. From 0% to 30% of the monomers are made up of combinations of one or more of the following depending on performance and compatibility requirements: alkyl hydroxyls (mono, di and tri functional), beta carboxy ethyl acrylate, methacrylic acid, acrylic acid (dimer, trimer and higher analogs), hydroxy ethyl methacrylate, hydroxy propyl methacrylate, hydroxy ethyl acrylate, hydroxy propyl acrylate and hydroxy butyl acrylate. The hydroxyl functionality provides residual functionality for compatibility with epoxies, vinyl esters and urethanes while the acid groups provide residual functionality for epoxies, polyesters and phenolics. The hydroperoxides may constitute 0% to 5% of the total weight of the composition. The accelerators may constitute 0% to 4% by weight of the composition, and the inhibitors 0% to 0.1% by weight of the composition.

In applying the binder, the binder resin can be sprayed, rolled or calendared as a film to coat the fibers of the material, optionally without filling the interstices among the fibers. After application of a binder, the reinforcement material is mechanically loaded onto a matched half of the forming mold (male or female).

The mold is shuttled into a forming press and the forming press closes to form the reinforcement material into the desired shape. Alternatively, the mold may be mounted directly in a forming station with no need for shuttle action. While closed, an atmosphere promoting the curing of the binder is applied to the forming molding therefore curing the catalyzed binder resin. The binder resin, in curing polymerizes to a rigid mass allowing the preform to retain the shape of the forming mold. When the atmosphere is discontinued in a system in which the binder generates heat for the reaction or is exothermic, the fiber-reinforced material may act as a heat sink allowing the preform to cool. Heating of the fibers is minimal since heat is given off only from the binder reaction. Heating of the mold surface is therefore also minimal.

A reinforcement material no longer needs to be heated, stretched and cooled to conform to the shape of the carrier preform. Sections can be added where needed and rigidized into place by chemical stitching techniques, herein also referred to as the above-mentioned energetic stitching.

Conventional preforming processes are presently being improved with automation, but generally continue to be operator dependent. The present invention is designed for a turnkey industrial manufacturing process with a high level of automation. With the use of automation/robotics, the fiber distribution becomes highly uniform and repeatedly consistent, making all aspects of the process statistically controllable.

After the rigidizing cycle, the forming press is opened and the preform is removed or the mold shuttled out where the carrier preform is mechanically unloaded and transferred to other processing locations for insert applications or molding. In conventional RTM/SRIM molding process applications for structural components, fiber layer thickness is adjusted to withstand strength requirements. The energetic stitching process allows for adding reinforcement materials selectively and specifically into high stress areas without increasing overall thickness and weight. Applications of inserts, closed sections and/or cores to the carrier preform can be processed with the use of energetic stitching techniques. Precut sections of reinforcement materials can be energetically stitched into place using secondary electromagnetic energy applicators. When using electromagnetic energy, the carrier preform with the added reinforcement and binder can be shuttled back into the forming press or into a secondary clamping device that holds the material into place while energy is applied.

The stitching process may also be carried out anaerobically. In this process hereby defined as "anaerobic stitching" the reinforcements are stitched to the carrier preform with an anaerobic binder and by exposing the preform, or the part thereof that is to carry the reinforcement, to an atmosphere promoting the curing of the anaerobic binder.

The finished preform can be transferred to a holding area or directly to the molding operation. Since rigidizing of the preform is typically faster than the molding cycle, various forming molds can also be set up in the rigidizing process, thus allowing for numerous preform shapes to be made to supply other molding stations.

Multiple plies of reinforcement material can be formed into desired shapes simultaneously. Other types of reinforcement materials may be encapsulated for stiffening, ribbing and attaching components using the energetic stitching process. These types of reinforcement materials, fibrous, metallic and/or light-weight structural foams and low density cores can be added at the onset of the loading and shaping process as part of the carrier preform or as a secondary operation where placement of insert materials are necessary for the preform structure.

When using the material in conjunction with unidirectional fabrics or other reinforcements in specific locations, optimum reinforcement structures of high fiber content can be attained while maintaining a rigid form for easily handling and permeation of resin systems into the interstices among the fibers of the material during molding operations.

Placement of reinforcements into specific locations allows fiber orientation where needed to obtain required strengths of the molded product.

Directed energy for energetic stitching and reinforcement inserts consists of either a localized application of microwave energy, visible light, ultraviolet energy, laser energy or mixtures thereof to specific locations of the preform to induce polymerization of the stitching binder resin.

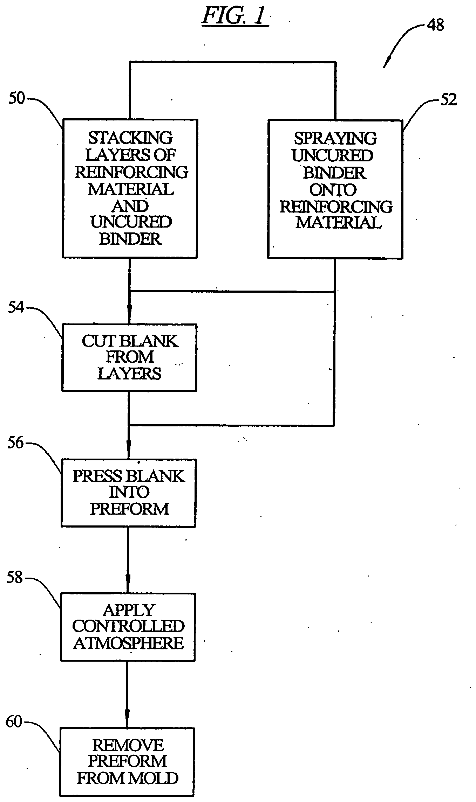

The process is illustrated by the flow chart of FIG. 1, a typical process for practicing some embodiments of the present disclosure is illustrated at 48 as comprising a step 50 of stacking layers of reinforcing material and uncured binder in which the layers are formed by applying binder to the reinforcement material or, in the alternative, the step 52 of spraying uncured binder onto a reinforcement material to be preformed to a degree sufficient to coat the fibers of the mat optionally without filling the interstices among the fibers. Alternatively, steps 48 and 52 may be combined, thereby stacking layers of material mixed with binder. Next, blanks are cut at 54 to conform to the shape of a planar development of the preform. At 56, the blank is pressed in the mold into the shape of the preform and an atmosphere promoting the curing of anaerobic binders, for example vacuum or inert gases, is applied at 58 to cause curing of the binder. At 60, the binder is cured and rigid, and the rigidized preform may be removed from the mold.

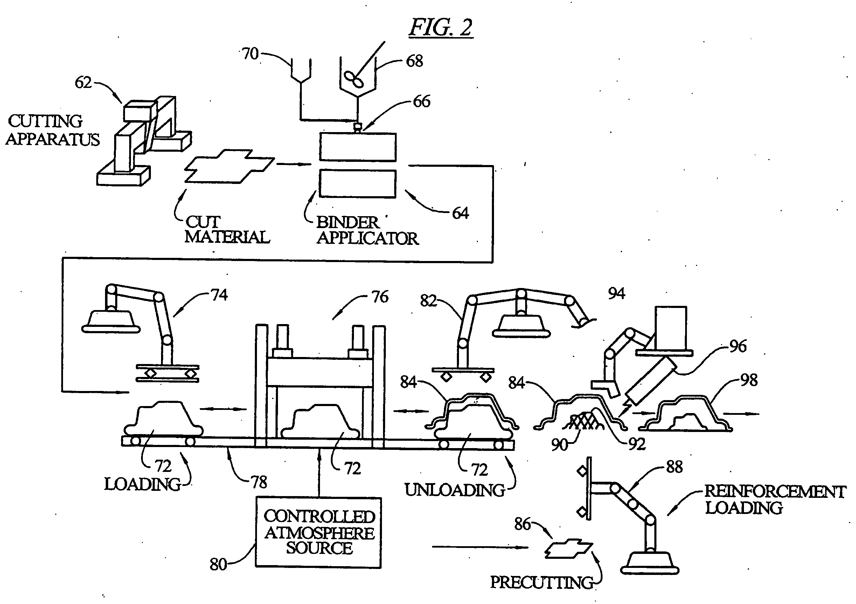

FIG. 2 illustrates a similar process using robots for handling the material between processing stations. In FIG. 2, the first step is to precut a reinforcement material to conform to the developed shape of a preform, as indicated by cutting apparatus 62. This is a version of the process set forth in FIG. 1. After the material is cut at 62, a binder is added at 64 in a binder applicator 66 which comprises a source of binder resin 68 the binder can be single component or two component and one component a source of a catalytic promoter 70. As mentioned above, the binder may be applied in the binder applicator 66 by spraying, rolling or calendaring to a degree sufficient to coat the fibers of the mat without filling the interstices among the fibers. Next, the composite blank of reinforcement material and binder is transferred from the binder applicator to a mold 72 by a robot 74. The mold 72 may be of the type illustrated in FIG. 2 such that the composite blank is positioned on the preforming mold. The mold 72 is then moved along a shuttle 78 to a press 76 where the two halves of the mold are pressed to replicate the desired shape of the preform and an atmosphere promoting the curing of anaerobic binders is applied from a controlled atmosphere source 80 such as a vacuum apparatus or an inert gas source. Optionally, the binder may also include an additional electromagnetic radiation-curable. or thermal cure component, and 80 may also comprise a source of electromagnetic energy or thermal cure source, whereby a thermal cure source is a heat source such as a hot air source, in order to cure this additional component.

Next, the mold 72 is unloaded by moving the same along the shuttle 78 to a position where a robot 82 unloads the cured preform 84. Here, the preform becomes a carrier preform in that reinforcement is to be added in the form of a reinforcing structure. The robot 82 will then stack the preform for short term storage or move it directly into the energetic stitching process.

When elements are to be stitched to the carrier preform, the reinforcement material is precut, as before, at 86 and a robot 88 positions the precut material over a form 90 so that it takes a reinforcement shape 92. A robot 94 then retrieves a preform 84, now a carrier preform, and places the same over the formed element 92. There will be points, not shown, that the carrier preform 84 and the formed element 92 engage in intimate contact. When the energetic stitching process utilizes electromagnetic energy, the element 92 comprises a binder resin sensitive to electromagnetic energy. The stitching process utilizes materials with a binder of choice selected to cure by the method of choice, for instance electromagnetic radiation, heat or anaerobic curing, is applied at specific spot locations where the elements 84 and 92 are in intimate engagement. The energy appropriate to cure the binder of choice, for instance electromagnetic radiation such microwave radiation, infrared radiation, visible light, ultraviolet radiation, laser light, electron beam or heat, or an atmosphere promoting the curing of anaerobic binders, may be applied locally, for instance with a directed energy source 96 such as fiber optics, laser or focused light; alternatively, the stitching may be accomplished by masking the areas where the binder is to be left uncured thereby curing the unmasked areas.

In either case, a reinforced structure 98 is produced. The structure 98 is then transferred to a molding process for molding of the finished structure.

In other embodiments, the present teachings also provide new methods for making preforms with "energetic basting" techniques, developed in U.S. Pats. Nos. 5,217,656; 5,364,258; 5,827,392 and 5,487,853, whereby a rigid three-dimensional preform is made by moving a plurality of webs of fibrous reinforcement material superposed and coplanar to a cutter, the webs being coated with an electromagnetic energy-curable binder and an anaerobic binder, or with a two-stage binder comprising an electromagnetic energy-curable component and an anaerobic component, and pressed together. Prior to cutting a blank in a two-dimensional development of the three-dimensional preform from the webs, the webs are tacked together at spaced local zones in an "energetic basting" step by locally curing the binder at those zones by locally applying the appropriate energy (for instance electromagnetic radiation, laser, electron beam) so that the webs travel as one to the cutter. After the basted blank is formed in the three-dimensional shape of the desired preform, the second cure stage is an anaerobic cure that will be initiated via the application of an atmosphere promoting the curing of the anaerobic component.

After preforming, the rigidized three-dimensional preform is removed from the mold and manipulated by robotic devices as a carrier preform for the possible attachment of reinforcement members. In this part of the process, the carrier preform is oriented to a desired position, a binder appropriate to the desired curing mechanism is applied to the surface area or areas thereof, a reinforcement rib or the like is moved into intimate contact with the area or areas with the binder and the sprayed area or areas and the binder is cured with the appropriate mechanism. The cured binder resin bonds the reinforcement member to the carrier preform. This attaching of reinforcement members, termed stitching, may take place several times to provide reinforcement ribs inside the three-dimensional shape, outside the three dimensional shape on the outer surface thereof and/or to add a cover which closes a hollow three-dimensional structure. After the final reinforcement member is attached, the preform may be stored or moved to a molding station of a liquid composite molding process. Preforms may also be manufactured with commingled materials such as TWINTEX® (Saint-Gobain Vetrotex, Shelby, Michigan) a commingled material comprising glass fibers and polypropylene fibers, and CURV® (Propex Fabrics, Gronau, Germany) a polypropylene/polypropylene commingled material. In such materials, the matrix resin is in the form of a thermoplastic fiber co-mingled with the reinforcing fibers. In application, the co-mingled material is heated up and the resin flows around the fibers thus producing a thermoplastic composite. If the co-mingled material is preconsolidated, the high viscosity of the resin dramatically reduces the conformability of the material into any complex shape. As a result, it is desirable to preform and rigidize the material so that the heating of the resin takes place on an already shaped part which is then consolidated without having to move the fibers greatly. In this case the thermoset binder is not affected during the heating and melting of the matrix resin and generally holds the preform in shape if the right amount of binder is used.

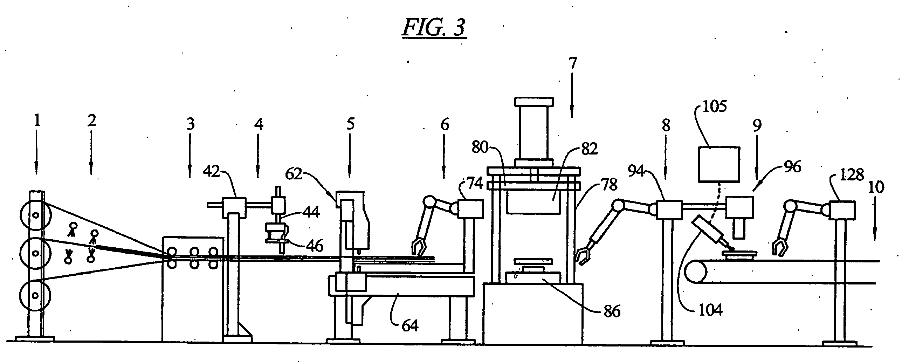

A process for making rigid three-dimensional preforms with the energetic basting techniques according to the invention is illustrated in FIG. 3 as comprising a plurality of process stations or stages 1-10.

At the supply stage 1, a plurality of rolls of reinforcement material, such as glass fiber continuous strand, woven fabric or the like is mounted for dispensing a like plurality of webs of the material superposed with respect to one another toward a compaction stage 3 where the webs are received, guided and directed coplanar with respect to one another.

Between the supply stage 1 and the compaction stage 3 is a binder application stage 2 in which an electromagnetic energy-curable binder and an anaerobic binder, or a two-stage binder comprising an electromagnetic energy-curable component and an anaerobic component is applied to at least one surface of each pair of facing surfaces of the webs. Here, the binder(s) may be applied to the upper and lower surfaces of the middle web, but may also be applied to the lower surface of the upper web and the upper surface of the lower web or to all of the facing surfaces.

In the pressing or compaction stage 3, the webs are pressed together causing spreading of the binders and permeation of the binders into greater contact areas with the fibers of the webs.

The superposed webs are then fed to an energetic basting station 4 where they are basted together at locations spaced longitudinally and/or transversely of the webs. These spaced locations, as will hereinafter be described, are also considered to be basting zones in that they are three-dimensional and extend to and bind all of the webs.

The webs, basted together form essentially a single element, are then moved to a near net shape or net shape pattern cutting stage 5 in which a two-dimensional planar projection or planar development of the three-dimensional desired structure is cut from the web for later forming into the three-dimensional shape of the preform. The shaped material cut from the multilayer web is transferred to a mold stage 7 by way of a material pickup stage 6. At the mold stage 7, the shaped material is positioned between separable parts of a mold which is then closed causing the shaped material to assume the contours of the three-dimensional preform. At the mold stage 7 and while still in the mold, the shaped material is subjected to an atmosphere that promotes the curing of the anaerobic binder resin. Upon curing, the shaped material becomes rigid and is transformed into a rigid three-dimensional preform. Upon opening of the mold, the preform may be removed from the mold stage 7 and transferred to stitching stage 9 by way of a material handling stage 8, that is if the preform is to be considered a carrier preform for the attachment of reinforcement members or the like. If not, the material handling stage 8 may simply deposit the rigid three-dimensional preform on a conveyor 10 for discharge for storage or for transport to, for example, a resin transfer molding (RTM) process or a reaction injection (SRIM) molding process. If the preform is to assume the status of a carrier preform, the material handling stage 8 may operate in conjunction with the stitching stage 9 to manipulate the preform into positions as hereinafter described.

In the stitching stage 9, reinforcement members are attached to the carrier preform by spraying a binder, as indicated at 104 onto specified locations of the carrier preform and/or the subassembly, the reinforcement rib moved into a desired orientation and into intimate contact with the locations by a material handling device 128 and the locations subjected to stitching, via the stitching process appropriate to the binder, by way of a stitching device 96.

There may be a plurality of the material handling devices 128, as needed, in order to handle and stitch a plurality of reinforcement members to the carrier preform.

As indicated on FIG. 3, the material handling stages may comprise a plurality of robots 74, 94, 128 and 105, of which the robot 105 for moving the spray device 104 is symbolically illustrated as connected thereto by mechanical linkage shown by broken lines. Inasmuch as robotics and robotic devices are well known in the art, a detailed explanation thereof is not considered necessary here.

It will be appreciated that the above-described process is continuous and describes a stepped process cycle in which the processing stage with the longest processing time is the controlling stage. Inasmuch as shaping and rigidizing the preform is only a matter of seconds, it is assumed that for most processes, this is not the controlling stage. Depending on the number of reinforcement members added and the nature of the shape of the shaped material, either of these stages could be considered the controlling stage by which all other processing times and the timing thereof are determined and tailored to the following molding process.

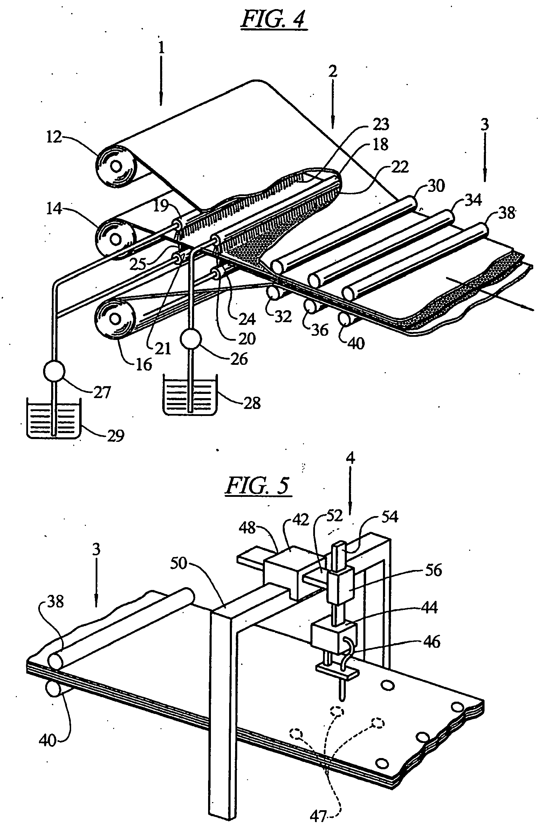

Referring to FIG. 4, a more detailed view of the supply stage 1, the binder application stage 2 and the compaction stage 3 is illustrated. The supply stage 1 is illustrated as comprising a plurality of rolls 12-16 of reinforcement material which are to be dispensed as individual webs in a superposed relation toward a predetermined location at the beginning of the compaction stage 3 at which the webs are aligned to travel coplanar with respect to one another. This is accomplished by a pair of opposed press rollers 30 and 32.

The binder resin spray applicator 2 is illustrated as comprising spray mechanisms 18, 19, 20 and 21 which are fed from reservoirs 28 and 29 by way of pumps 26 and 27 to provide a mist or cloud 22, 23, 24 and 25 between the upper web 12 and the center web 14 and between the center web 14 and the lower web 16. In one configuration, reservoir 28 contains electromagnetic radiation-curable binder, whereas reservoir 29 contains anaerobic curable binder. In another configuration, reservoir 28 contains the first part of a two-part anaerobic curable binder (the initiator) whereas reservoir 29 contains the second part of said anaerobic curable binder (the activator). Alternatively, the electromagnetic radiation-curable binder and the anaerobic binder may be applied as two component system (as described above).

The pump and applicator dispensing the binder may be set up in a way such that the binder may be applied specifically at selected spaced locations. The binder coats at least one of the facing surfaces of each pair of facing surfaces with binder resin.

As the superposed webs move through the compaction stage 3, pairs of opposed press rollers 30 and 32; 34 and 36; 38 and 40 press the webs together to the desired level of compaction ideal for deformation into the desired final shape and spread the binder resin for permeation into the webs and to enlarge the contact area thereof with the fibers of the webs. The compaction can be minimal and thereby facilitate the sliding or shearing of the fibers during deformation into the desired 3D shape. This minimizes the possibility of wrinkling or buckling of the reinforcing materials as is common when the shape needed exceed the conformability characteristics of the reinforcing material.

Referring to FIG. 5, the coplanar multilayer web structure is illustrated as exiting the compaction stage 3 between the press rollers 38 and 40 and entering the basting station 4. The basting station 4 comprises a gantry 42 including a member 48 which may be driven transversely above the webs on a beam 50, a member 52 which may be moved with respect to the member 48 in the direction of movement of the webs and opposite thereto, a member 56 carried in cantilever fashion at an end of the member 52 and a member 54 which may be driven perpendicular to the webs through the member 56, the member 54 supporting a source 44 which may be for instance an electromagnetic energy source, a laser source, a controlled atmosphere source or more generally a source providing the energy or conditions appropriate for curing the binder.

The source may be periodically activated or its emission may be periodically gated to provide curing at spaced zones in the desired locations of the webs. The driving and driven members may include rack and pinion type structures or linear motor type structures.

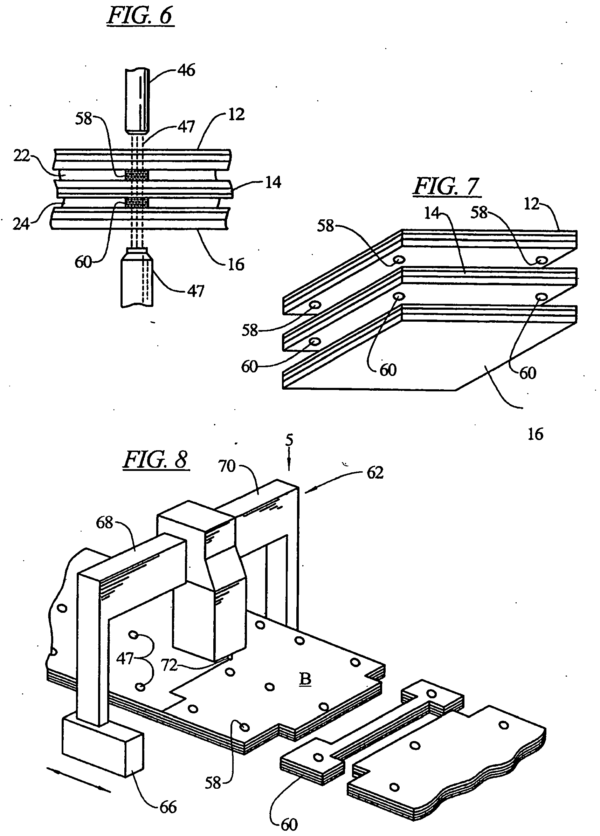

Turning to FIGS. 6 and 7, a source 46 and optionally 47 that cure the binder according to the appropriate mechanism are illustrated in FIG. 6, curing the binder in respective zones 58 and 60 to bind the webs together. The same bound structure is illustrated in FIG. 7 with the zones 58 and 60 indicated as points of connection between the webs. Such zones can be either spots or stripe-shaped. The basting of a laminate schedule or segments of a laminate schedule can take place at the cutting table as part of the cutting process and would most commonly take place there so that the spot cures would hold the materials optimally with respect to the shape and subsequent forming operations.

Referring to FIG. 8, the basted webs are illustrated as having moved into the near net or net pattern cutting stage 5 where they are cut into basted multilayer mats or blanks B. The cutting stage 5 may comprise a gantry 62 including a transverse member 68 which is mounted for movement longitudinally of the webs on a member 66 which is supported by a table 64 (FIG. 3). A member 70 is movable transversely on the member 68 and comprises a device for cutting the multilayer webs into the desired shapes. The gantry 62 and the device 70 therefore constitute an X-Y pattern cutter which is effective to cut the desired shapes for the mats or blanks B by way of a cutter 72 which may be constituted, for example, by a knife or a laser beam. As mentioned above, the basting head may be mounted on the gantry 62 and periodically operated to baste the webs together. As indicated above, the driving structures for the elements 48-56 of FIG. 3 and 64-70 of FIG. 6 may be electric motors with rack and pinion output structures or any other suitable devices for providing X, Y, Z or, respectively, X-Y movements.

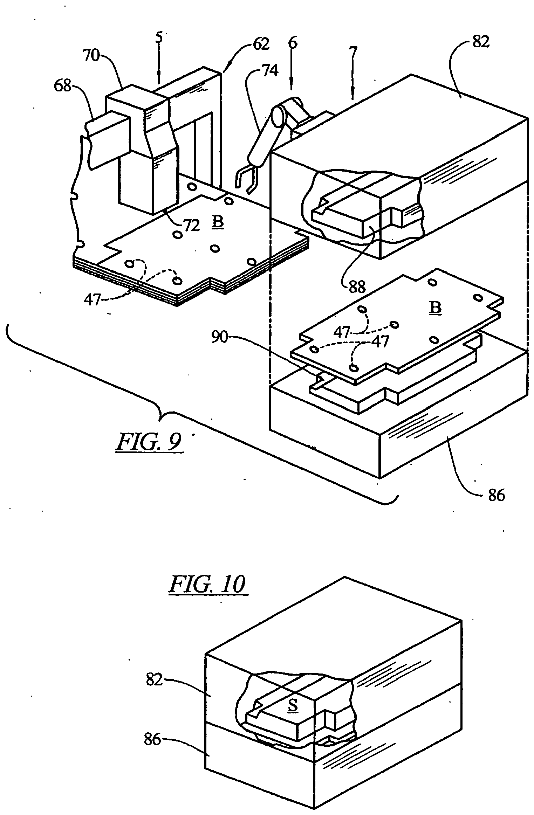

The cut blanks B are removed from the cutting stage 5 by the material pick up apparatus 74 of the material handling stage 6 and positioned in the mold stage 7. This is shown in greater detail in FIG. 9 in which a cut blank B has been positioned over a lower shaping mold 86 which includes a male mold plug 90 and which is below and in registry with an upper shaping mold 82 which includes a female mold cavity 88 generally conforming to the shape of the male mold plug 90. Alternatively, the male mold plug may be part of the upper shaping mold and the female mold cavity may be part of the lower shaping mold. As shown, another blank B is being cut at the cutting station 5 and the robot 74 has returned to handle that next blank B.

The mold is then closed by operating the ram 84 to lower the crossbar 80 and the upper mold 82 to mate the upper and lower shaping mold parts, as shown in FIG. 10, so that the blank B now assumes the character of a three-dimensional shaped element S which conforms to the desired shape of the rigid three-dimensional preform.

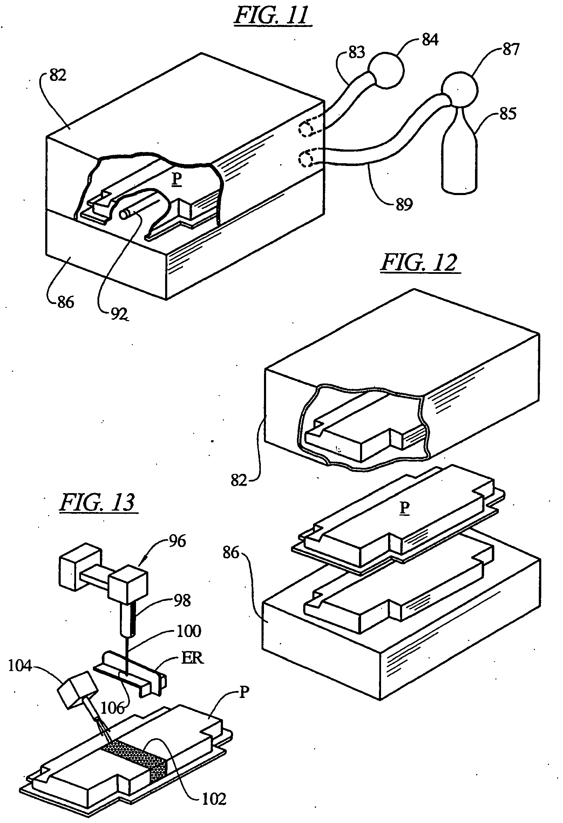

While the mold is closed, and as specifically illustrated in FIG. 11, the shaped element S is subjected to an atmosphere promoting the curing of the anaerobic binder, for instance by drawing vacuum via tubing 83 and pump 84, and optionally by adding inert gas from gas-tank 85 via regulator 87 and tubing 89. After curing, the molded element is a rigid three-dimensional preform P which may be moved from the mold stage 7 and deposited on the conveyor 10 to transport the same for storage or for use in a further molding process as set forth above.

Referring to FIGS. 3 and 12, in order to remove the preform P, the ram 84 is operated to raise the crossbar 80 and the upper mold 82 to separate the mold 82 from the mold 86. The robot 94 may then pick up the preform P, as illustrated in FIG. 12, to move the preform P either to the conveyor 10 or to the energetic stitching station 9.

Assuming that the preform P is now considered to have the status of a carrier preform, the preform P is moved to the energetic stitching stage 9 (FIG. 3). At this station, the robot 94 of the material handling stage 8 may place the preform P in the position illustrated in FIG. 13. While in this position, a robot 105 manipulates a binder applicator 104 to apply a binder on an area 102 at a location at which an external reinforcement rib ER is to be attached and/or on the matching surface of the reinforcement rib. Then, a robot 128 (FIG. 3) or another suitable manipulator orients the member ER into position transversely of the preform P and into intimate contact with the preform. Then, a robot 96 positions an appropriate stitching device into place which in FIG. 13 is represented by 98 for applying the appropriate curing method, for instance an ultraviolet beam 100, and to direct the same onto an area 106 or, preferably, a plurality of such areas along the rib ER, to cure the binder thereat and stitch the rib ER to the preform P.

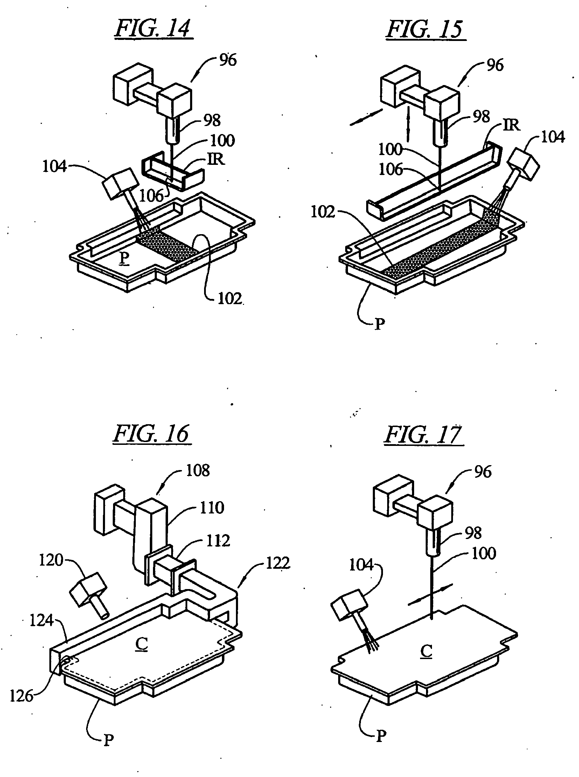

The robot 94 may then rotate the preform P 180° and the same steps then performed for an internal reinforcement rib IR to stitch the same with the cavity of the carrier preform P. As shown in FIG. 14, this is an almost identical operation to that shown in FIG. 13 for the external rib ER. The robot gantry 96 may be moved, in either case, to scan along the length of the rib and stitch the respective rib to the carrier preform at a plurality of the locations 106.

Alternatively or in addition to the internal rib IR being applied, the robot 105 may manipulate the binder applicator 104 to spray an elongate area along the inner surface of the carrier preform P and/or a matching surface of the internal rib IR. In this case, as shown in FIG. 15, the robot 128 or similar manipulator picks up and moves an appropriate shaped elongate internal reinforcement member LIR into intimate contact with the preform P at the sprayed area and for example ultraviolet beam 100 scans that area or a plurality of locations 106 thereof for stitching the member LIR to the interior of the carrier preform P.

Sometimes it is desirable to close the hollow structure of the preform or of the carrier preform P including any core material therein to block filling with resin during the following molding process alternately a sandwich structure can be preformed by including a core material such a balsa, foam or honeycomb between two or more layers of reinforcing materials in order to yield a strong light weight composite part. Sandwich structures are well known in the composites industry. In this case, and as shown in FIGS. 3 and 16, the robot 128 or similar manipulator picks up a cover C and positions the same in registry with the preform P. The robot 94 and possibly additional robots may then grasp and position a portion of the edges of the assembly, after spraying the marginal edge or flange of the preform P and/or of the cover C with binder, into a slotted waveguide 122 having an upper section 124 and a lower section 126. The carrier preform has now been stitched closed and may include core material and/or one or more internal reinforcement ribs of the type illustrated in FIGS. 14 and 15. In addition, it may include or be manipulated and stitched to include one or more external ribs ER of the type illustrated in FIG. 13.

FIG. 17 illustrates a similar cover stitching procedure in which the binder spray 104 is manipulated to spray binder resin along the marginal edge or flange of the preform P and/or a cover C and the cover C is manipulated into proper position and the two elements are stitched together with an stitching head 98 which is positional by way of the gantry 96 to stitch around the entire periphery of the assembly.

As mentioned above, the basting and stitching procedures, in fact all such attachment procedures, may be performed by the appropriate mechanism, for instance via an electromagnetic energy source, a laser source, a controlled atmosphere source or more generally a source providing the energy or conditions appropriate for curing the binder.

In summary, the present embodiments of the invention provide a process for making rigid three-dimensional preforms using reinforcement materials such as carbon fiber webs coated with a binder resin. The webs are drawn from respective rolls of reinforcement material and superposed and directed such that they travel toward a common location at which they are guided so as to travel parallel with respect to one another. Before becoming parallel, the superposed webs have a binder resin of anaerobic-curable material applied, to at least one surface of each pair of facing surfaces and, after becoming parallel, are pressed together to distribute the binder resin and increase the contact area thereof with the fibers of the reinforcement material. Alternatively, a two stage binder containing an anaerobic component and a second and/or third component can be applied. The anaerobic binder component cures upon application of an atmosphere promoting its curing, and the other component(s) cure in response to the application of the appropriate energy. After being pressed together, the webs may also travel to a basting station.

Next, the basted web is cut into shapes each corresponding to a two-dimensional planar development of the three-dimensional shape of the desired rigid three-dimensional preform. The cut material is then transferred to a preform mold where it is formed into the three-dimensional shape of the preform between complementary-shaped upper and lower molds. The molds are constructed so as to be amenable to the application of an atmosphere promoting the curing of anaerobic binder and are operable therewith to cause the curing of the anaerobic binder and to cause the cut material to become rigid, thus resulting in the desired three-dimensional preform. At this time, the preform may be utilized in a further molding process or may be considered as a carrier preform to which a subassembly or subassemblies (reinforcement elements and/or mounting members) are stitched by applying a binder to a selected location or locations, moving the subassembly into intimate contact with the preform at those selected locations on the preform and/or on the subassembly and applying selected the selected method to cure the binder and attach the reinforcement member. These last steps may be multiplied or repeated to attach a plurality of subassemblies including a cover member which closes the hollow shape of the preform to hold a core therein. After all of the reinforcement and/or mounting members are attached, the resulting preform may be transferred to a further molding process.

In additional embodiments, the present teachings may also be applied to two-stage curing methods for making mats such as those developed in U.S. Patents 5,217,654 and 5,382,148, whereby fiber mats are made for subsequent use in preforming for a liquid composites RTM or SRIM molding process. According to the present teachings, an electromagnetic energy-curable binder and an anaerobic binder, or a thermal-curing binder and an anaerobic binder, or a two-stage binder comprising an electromagnetic energy-curable component and an anaerobic component or a thermal-curing component and an anaerobic component, are applied to the mat. In the first stage, a partial cure is provided by electromagnetic radiation or the application of heat for curing of the thermal binder, leading to a predictable and finite increase in viscosity to that of a semi-solid so that the fibers are sufficiently bound for subsequent handling, but not sufficient to complete a cure, while leaving a second stage ready for a final cure which is achieved by the use of an atmosphere promoting the curing of the anaerobic binder. Prior to the second curing stage, the mat is formed into a three-dimensional shape of a desired preform. The second curing stage then takes place with an atmosphere promoting the curing of the anaerobic binder while still in the mold, to obtain a rigid three-dimensional preform structure.

Typical binder to fiber material ratios will be on the order of 1% by weight to 12% by weight of the fiber material and it is preferred that the binder ratio will be in the range of 2% to 8% range. The two-stage binders are unique in that they will contain two separate reaction components that will function independently via different methods of initiation and using different mechanisms for initiating the reaction of each component.

The first stage component includes for instance a thermal free radical generator of the type responsive to the heat generated by microwave energy or a thermal source such as infrared rays or hot air convection, such as Lupersol 256, Benzyl Peroxide, Tertiary Butyl Peroctoate and Tertiary Butyl Perbenzoate, or to visible light, such as Irgacure 651, Irgacure 184 or Irgacure 907, or to ultraviolet light, such as Irgacure 261, Cyracure UVE 6990 and Cyracure UVE 6974. The Irgacure products are produced by Ciga Geigy Corp. of Greensborough, N.C. and Hawthorne N.Y. and the Cyracure products are produced by American Cyanamid Corporation, Wayne, N.J. The amount and selection of the first stage initiator in combination with the type of binder resins will determine the first stage of viscosity after exposure to the appropriate energy.

It is therefore readily apparent that the first stage which is responsive to provide a partial cure is responsive to the appropriate energy and the remainder of the binder is uncured until such time that the same is used in making a preform and may be cured anaerobically.

The ratio of first-stage photoinitiator to the binder resin and exposure to the appropriate energy will determine the viscosity of the resulting partially-polymerized binder. The viscosity at the completion of the first stage reaction should be such that, when staged in this manner, the binder will have the viscosity raised to a point where it will hold the glass fibers together for handling, preferably tack-free, during subsequent processing. The binder will be plastic, deformable and not yet rigid enough to hold the three-dimensional shapes of preforms. In other words, it will be pliable for preforming and the following second stage cure. During the preforming process and the interstices of the glass fibers are obviously not filled at this time as they will be later during the final molding process.

The second stage component of the binder generally includes one or more resins, one or more monomers, one or more hydroperoxides, one or more initiators and one or more inhibitors. An example second stage binder component includes 15% to 55% by weight of a resin such as epoxymethacrylate and 45% to 85% by weight of monomers such as methacrylate monomers, polyhydric alcohols and ester alcohols. From 0% to 30% of the monomers are made up of combinations of one or more of the following depending on performance and compatibility requirements: alkyl hydroxyls (mono, di and tri functional), beta carboxy ethyl acrylate, methacrylic acid, acrylic acid (dimer, trimer and higher analogs), hydroxy ethyl methacrylate, hydroxy propyl methacrylate, hydroxy ethyl acrylate, hydroxy propyl acrylate and hydroxy butyl acrylate. The hydroxyl functionality provides residual functionality for compatibility with epoxies, vinyl esters and urethanes while the acid groups provide residual functionality for epoxies, polyesters and phenolics.

The hydroperoxides may constitute 0% to 5% of the total weight of the composition. The accelerators may constitute 0% to 4% by weight of the composition, and the inhibitors 0% to 0.1% by weight of the composition.

The second stage binder component may be a single component or two component system. In the two component system the hydroperoxides and the inhibitors are separated from the accelerators. Also, the second stage binder may be formulated so as to comprise all its components with the exception of the hydroperoxide, which are added with a mixing system that adds the peroxide at the desired and variable level.

Example two component systems include 1:1 by weight combinations of a "Part One" mixture with a "Part Two" mixture, wherein the relative quantities of hydroperoxides, accelerators and inhibitors vary in range as listed below in Table 1:

| **Example #** | **Composition of Part One** | **Composition of Part Two** |
|---|---|---|
| 1 | Resin, monomer, accelerators in a quantity of up to 8% by weight | Resin, monomer, hydroperoxides in a quantity of up to 10% by weight, |
| | | inhibitors in a quantity of up to 0.2% |
| 2 | Resin, monomer, accelerators in a quantity of up to 4% by weight, inhibitor in a quantity of 0.1% by weight | Hydroperoxides, mixed in during the application of the resin at up 5% of the weight of Part One |

Modified formulations from HOLDTITE® (Gateshead, United Kingdom) may also be used, for instance HOLDTITE® Resin Series 200/T90 and HOLDTITE® Activator A649NF, with HPMA as the reactive monomer to carry the activator so that a 1:1 pumping system may be used.

Because the second-stage binder component has been left unreacted during the first stage partial polymerization, the second stage cure takes place after the mat product produced during the first stage has been formed into its three-dimensional shape which is the shape determined as necessary to replicate the final product for the final molding operation. The second stage cure takes place by exposing the binder to, for example, an atmosphere that promotes the curing of the anaerobic binder.

The present process will permit the use of single end roving, such as PPG No. 2002, OCF 366, 107B or 30, or Certainteed 625 or 670. This will provide a variety of yields with the yield selected in accordance with the binder resin makeup.

The two-stage binder also eliminates the need for two separate applications of different binders when preforming using ultraviolet-cured binders for preforms as in the aforementioned COMPFORM® processes. Current technology dictates that mat-type products are purchased with conventional binders applied thereto when they are produced. Conventional binders require modification with heat during preforming or their resilience must be overcome during preforming. New two-stage binders, according to the present invention, eliminate these problems by using a single binder resin with two distinct and different initiators systems that work by completely different means. When used in making mats or performable mats, the first stage takes the place of the first binder as applied by the reinforcement manufacturer, i.e. the glass fiber manufacturer, and the second stage takes the place of the second binder applied by the preform manufacturer for use in preforming.

Because the first stage photoinitiator partially reacts the binder, the second stage cure requires less cross linking to obtain a final cure. This will speed up the second stage cure over what it would have been if there was no first stage cure. It should be understood that the free radicals generated in the first stage curing cause limited cross linking in the binder until there are no further free radicals being generated to advance the cure.

Since the binders are liquid, they do not need to be carried in water to be sprayed. Residual moisture in the reinforcing fibers has long been proven as a cause for reduction of physical and electrical properties with some matrix resins. Because there is no water in the system, there is no required drying and the just-mentioned problem is overcome. Curing by the appropriate energy and anaerobic curing provides the necessary stiffness and material handling characteristics.

For simplicity, the following description is primarily concerned with nonwoven mats, since any process benefits are also applicable to any woven reinforcements where binders are used. Fiber mats come in two general categories, discontinuous fibers called chopped strand mat and continuous fibers generally called continuous strand mat. The present invention applies to both styles of mats or combinations thereof. There are many styles to each of these types of mats.

In the process of the present invention, the fiber mats are prepared by the manufacturer, i.e. as a layer of fibers deposited on a moving web, as disclosed in U.S. Pat. No. 4,054,713 using a two-stage binder. The mats are prepared on a continuous web or belt and, upon completion of the layer formation, a binder is applied, typically by spraying, or it can be calendared. The binder is generally applied in a range of 1%-12% by weight of the fiber, typically and preferably in the range of 2.0-8.0 weight percent. After application of the two-stage binder, a residence time to allow some wetting of the fibers can be provided by a transport distance to the compression and curing section of the production line as in my patent 5,169,571. The mats may also be manufactured with a veil, wherein a veil is a fiber mat that has the purpose to create a resin rich surface, for instance to improve properties such as corrosion resistance and appearance. In some embodiments of the invention, the veil is laid down using a roving that is specially produced for this purpose. The veil may be on either side or on both sides of a mat, depending on which side of the preform the veil is needed on.

The intent of the present concept is to provide new binders for use with reinforcement materials. These new binders are to be used to make mat-type products that will then be used in the manufacture of preforms which as is well known in the art, are then used in the manufacture of impregnated finished articles such as bumper beams, sinks and the like. It is to be understood that preforms are three-dimensional products which are used as a basis for making, and as a backbone for making a conforming three-dimensional finished RIM, RTM, SRIM, or similar molded product.

It is usually desirable to compress the layers to achieve the desired density/thickness ratio. In the process of the present invention, as disclosed in US Pat. No. 5,169,571 the layers are compressed in stages and held in compression during staged curing. There are several techniques available for achieving the desired density/thickness ratio by compression using rollers or continuous belts or combinations thereof as disclosed in the aforementioned applications.

When using visible light as the first curing energy, light can be applied in several different ways: through a web or continuous belt; between rollers over the belt or web, through the rollers; and through the openings between rollers. When the light source is to be contained in the rollers and the light transmitted through the rollers, the rollers can be made of porous metal screen that will allow light transmission or that they can be made of a light-transparent material, such as a light-transparent acrylic or of a light-transparent glass or quartz. The belt or web can be made of a porous flexible metal screen that will permit light transmission or it can be made of a light transparent polymer belt or web, such as light-transparent polyethylene, light-transparent acrylic or light-transparent polyvinylchloride. Transparency is relative to the portion of the spectrum in which one is operating. As in the aforementioned US Pat. No. 5,169,571, a light-transparent film can be employed as the web which would also act to keep the uncured binders from the surfaces of the rollers or belts, if desired. It would also keep the potentially-abrasive glass materials from wearing out the surfaces of the transport system. If desired, the light-transparent film can be left with the product as a layer separator in the rolls. A further use of this film then can be as a vacuum seal if desired in subsequent cutting or forming applications prior to the second stage curing and such as in my aforementioned previous patent. The film may also be gas-permeable, in order to allow anaerobic curing.

The process is applicable to the utilization of different forms of energy. Therefore, a detailed description of the use of appropriate energy systems will be provided hereinbelow.

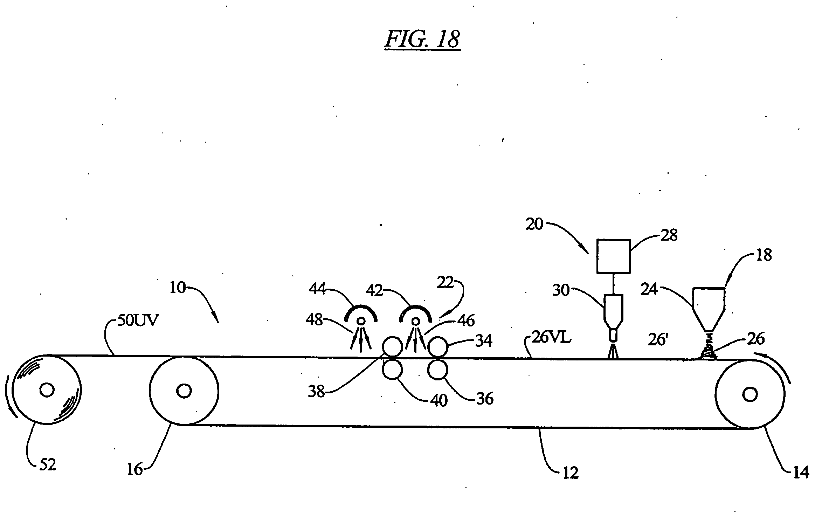

Referring to FIG. 18, a mat forming system is generally illustrated at 10 as comprising a plurality of stages spaced along a conveyor belt 12 which is supported for travel along a defined path by a pair of end rollers 14 and 16. The system includes a fiber preparation and application stage 18, a binder applicator 20 and a compression and curing stage 22. At the terminus of the conveyor belt 12, adjacent the roller 16, the formed mat is taken off and rolled up on a take-up or winding roller 52.

At the applicator stage 18, reinforcement fibers, for example either continuous strand or chopped fibers, are prepared in a manner known in the art, such as disclosed in the aforementioned U.S. Pat. No. 4,054,713. The reinforcement fibers may also be variable mixes of continuous strand and chopped fibers. The fibers are prepared in the apparatus 24 and deposited, symbolically indicted by the arrow 26, onto the upper surface of the conveyor belt 12 as a layer 26' of fibers. The layer 26' of fibers is then received at the binder applicator station 20 in which binder is drawn from a supply 28, here a two-stage binder, and applied by way of an applicator 30 onto the upper surface of the formed layer 26' to form a binder-coated layer 26_{VL} on the upper surface of the conveyor belt 12 with a 1.0-12.0 weight percent of binder, preferably 2.0-8.0 percent weight with respect to the glass fiber or other reinforcement material.

The binder-coated layer 26_{VL} then passes into the compression and curing stage 22 in which the conveyor belt 12, more particularly the layer 26_{VL} carried thereon is compressed between pairs of spaced compression rollers 34, 36, 38 and 40 where the layer 26_{VL} is compressed to a desired density/thickness ratio by the rollers, in stages, and the first component of the binder is cured, in stages, by way of the spaced energy sources 42, 44 which provide the appropriate energy for curing said component, for instance a source of visible light, ultraviolet light, infrared light, microwave energy, laser light, electron beam or a heat source such as hot air. Such sources may extend transversely of the layer 26_{VL} and radiate energy as indicated at 46, 48.

After compression and curing, the finished fiber mat, now referenced 50_{UV} is taken from the conveyor belt 12 and may be rolled up on the wind-up roller 52. Alternatively, the mat may be fed directly to the cutting machinery or directly to the preforming equipment. If rolled, the mat may then be fed on demand to the cutting machinery or directly to the preforming equipment.

Alternatively, a mold portion can be mounted on the belt system, and a fiber mat directly formed on the mold portion. This is achieved by applying the fibers and the binder directly to the mold portion, followed by the curing of the binder which may take place in one or two stages. When desired and when the preform requirements allow it, the binder can be cured in one step during the deposition of the fibers by applying the appropriate energy with the applicable energy. This does not allow the consolidation step but some applications do not require the preform to be consolidated. This also allows the directed fibers to be sprayed directly in a molding tool with or without a gelcoat or with or without a skin material, using a high viscosity version of the binder where the viscosity and "tacky" nature of the binder acts first to hold the reinforcement in place without vacuum and secondarily to secure the reinforcement with curing of the binder with exposure to light energy for curing.

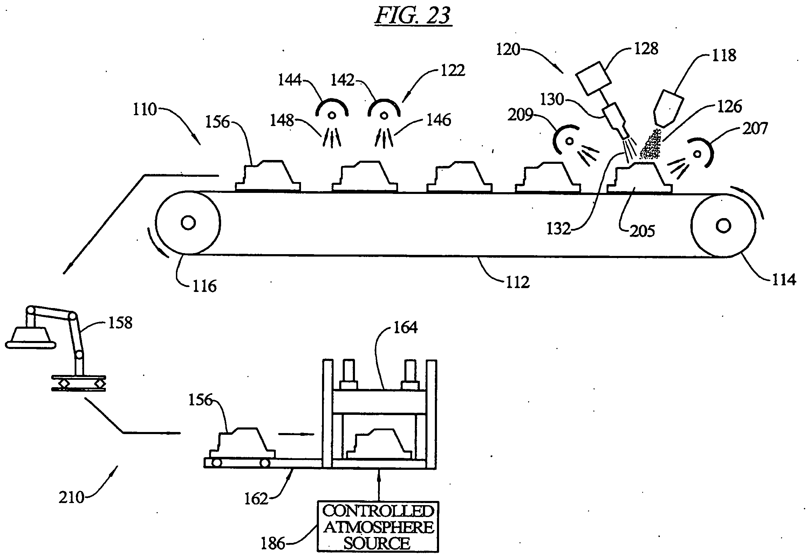

Referring to FIG. 23, a fiber and binder application with a first stabilization system is generally illustrated at 110 as comprising a plurality of stages spaced along a conveyor belt 112 which is supported for travel along a defined path by a pair of end rollers 114 and 116. The system includes a fiber application device 118, a binder applicator 130. At the terminus of the conveyor belt 112, adjacent the roller 116, the form is taken off and moved to the consolidation station 210 by robot 158.

At the applicator stage 118, reinforcement fibers are deposited by the apparatus 124 as symbolically indicated by the arrow 126, onto the surface of a mold portion 205. A binder composition, here a two-stage binder composition, is drawn from a supply 128 is applied by way of an applicator 130 as binder 132 together with the fibers, to form a binder-coated layer on the surface of the mold portion 205. Optionally, the binder and the fibers may be applied together by way of a combined binder and fibers applicator device. The first stage component of the binder is cured with the appropriate type of energy applied by energy sources 207 and 209. In alternative embodiments, a veil may be added to either side or both sides of the reinforcement fibers, depending on which side of the preform the veil is needed on.

Alternatively, the fiber and binder-coated mold portion 205 passes into the first stabilization system 122 in which the appropriate energy sources 142 and 144 extend transversely of the conveyor belt and radiate the same as indicated at 146, 148.

After curing, the partially-cured preform on the mold portion, now referenced 156 is taken by robot 158 from the conveyor belt 112 and fed to the consolidation station 210. The consolidation station comprises a consolidation stage wherein the anaerobic component of the binder is cured. in the form of a forming press 164 with counter mold, as in FIG. 23, and partially-cured preform 156 is moved along a shuttle 162 to the forming press 164 where the two halves of the press are pressed together to replicate the desired shape of the preform and an atmosphere promoting the curing of the anaerobic binder component is applied from a controlled atmosphere source 186. Alternatively, the consolidation stage may be a film or flexible tooling that is placed on the tool surface and a vacuum source is applied. The applied vacuum may be optionally applied in such a fashion as to completely cure the anaerobic component of the binder or not to completely cure the anaerobic component of the binder, depending on the application at hand. If desired, reinforcements may be attached to the preform according to the energetic stitching techniques set forth above.,

In an alternative embodiment of the invention, the first stage stabilization system can be eliminated and the tool moved directly to the consolidation station.

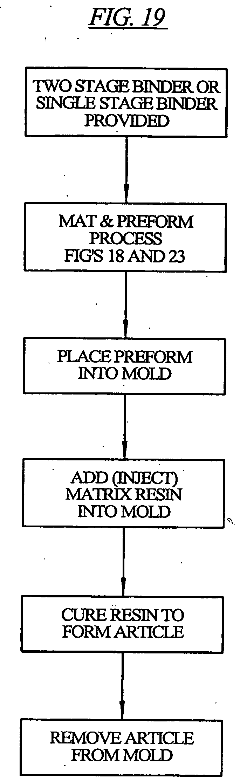

Referring to FIG. 19, the entire molding process is generally set forth in flowchart style in which a two-stage binder is provided to the binder applicator 20 of FIG. 18, and the mat is formed according to FIG. 18 and a preform is formed. The preform is then placed into a mold, in accordance with RIM, RTM and SRIM processes or other such processes that use or require a preform and a deformable plastic material, such as a matrix resin is introduced into the mold, such as by injection or vacuum or other such method, to flow the matrix resin into and fill the interstices of the preform. The matrix resin is then cured in the mold and the product is then removed according to methods known in the art. Alternatively, in the entire molding process, as set forth in the flow chart of FIG. 19, a single-stage or a two-stage binder is provided to the binder applicator, the material is applied directly to a tool as shown in FIG. 23, and a preform is produced either directly using a single-stage binder or using a consolidation process comprising a the use of a two-stage binder as described above. The preform may then be used as described above.

In further embodiments, it is an object of the present invention to provide an improved directed fiber process for making structural preforms with anaerobic binder. This object is attained by providing a mold which is perforate to support a flow of air therethrough when placed in a plenum, as previously disclosed in US Patent No. 5,192,387. The reinforcement material is drawn from a supply of roving on spools, optionally chopped and flung as would occur by spraying or directing toward the perforate mold part. An anaerobic curable binder is added to the fibers to at least partially coat the fibers with binder during their travel to the perforate mold part and/or after reaching their destinations at the mold part. The binder is applied to a degree sufficient to coat the fibers, optionally without filling the interstices among said fibers. During the application of the fibers and the binder, the perforate mold part may be rotated so as to obtain complete coverage with the fibers to a desired thickness. In order to enhance and even coverage, the fibers and binder may be directed from the distal end of a robot arm which may be operated in accordance with a program to scan the perforate mold part to ensure coverage at all areas including the inside corners thereof.

After the fibers and binder have been applied to the perforate mold part, if consolidation is required, the mold is closed to press the applied fibrous mat into the desired shape of a preform by pressing a complementary shaped second mold part against the preform. This is a low-pressure pressing operation and ensures that the fibers bridging the inside and projecting from outside corners of the shaped fibers are deformed to conform to the shapes of those corners. Alternatively, vacuum may be used to consolidate and cure simultaneously by applying a flexible cover to seal the tools for application of an atmosphere promoting the curing of the anaerobic curable binder, instead of the second perforate mold part, to the applied fibers. The flexible cover may be a thin film of a material such as polyethylene, silicon or a soft elastomer and the non perforate tool can be of any reasonably rigid tool material, thermoformed sheet material or the like.

While still in the mold, the preform is subjected to an atmosphere promoting the curing of the anaerobic curable binder to cure the binder and rigidize the fibrous mat in the pressed shape. At this time, the preform may be transferred to a molding process for making a structural composite or it may be considered a carrier preform which is to have reinforcement members or the like attached thereto.

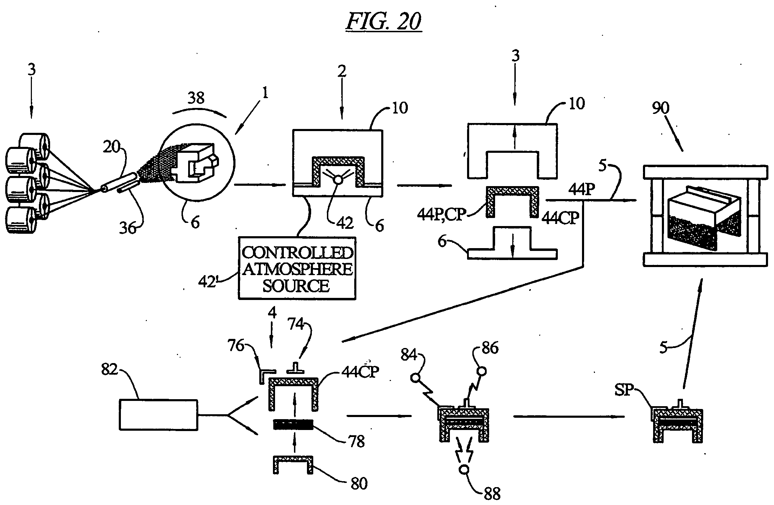

As shown in FIG. 20, the basic direct fiber preforming process using an anaerobic binder is generally illustrated as being performed in 3 or alternatively 4 stages including a fiber and binder deposition stage 1, an anaerobic curing stage 2, a completed preform stage 3, an energetic stitching stage 4, and a supply stage 5. Energetic stitching is application dependant.

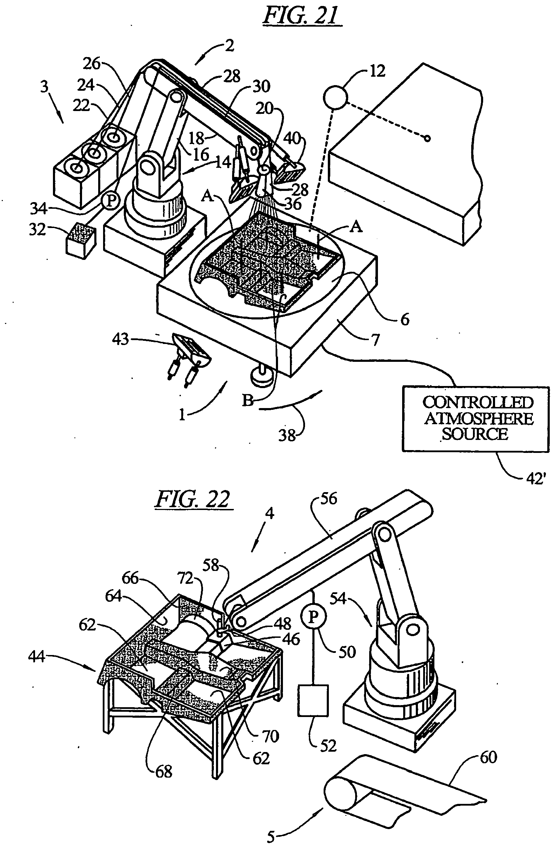

The fiber deposition stage 1 (FIG. 21) comprises a lower, first mold part 6 which is supported for rotation by a plenum 7. The first mold part 6 is a perforate element which will support a flow of air therethrough by way of the plenum 7 to build up a mat on surfaces 8 which are oblique to one another and define inner and outer corners. The mold part 6 is complementary to an upper, second mold part 10 and the two parts have complementary inner surfaces which define a desired three-dimensional shape of a preform for replication of the preform. When consolidation is desired or required, this may be accomplished by applying a closure may to provide a chamber for a controlled atmosphere promoting the curing of anaerobic binders.

The mold parts 6 and 10 are parts of a low-pressure press mold and are illustrated as being mechanically linked to a mold closing and opening mechanism 12 which may be constituted by a hydraulic ram or rams and appropriate guides and linkages as are well known for press molds. With the mold open, fibers of reinforcement material, such as glass fiber or carbon fiber reinforcement material, and an anaerobic curable binder resin, are propelled into the air stream (indicated by the arrows A) established through the plenum and the perforate mold part 6 and directed onto the profile shape of the mold part 6. In order to improve coverage, the mold part 6 can be rotated as indicated by the arrow 38 and the fibers and binder are directed, via the air stream, onto the mold part 6 by way of a robot 14 of the applicator stage 2.

The robot 14 is illustrated as comprising a vertical axis and at least two horizontal axes so that the fibers and binder emanating from the distal end of the arm structure 16, 18 may be directed to all parts of the rotatable mold part 6.

The application stage 2 is illustrated as comprising the robot having the arms 16 and 18, a chopper 20 which receives roving 22, 24, 26 from spools of roving at the supply stage 3 via a tube 28 mounted on the arm 18, and a conduit 30 carrying binder 32 supplied by way of a pump 34 to a spray nozzle 36, and an outlet port 22 for the chopped fibers.

The supply stage 3 is illustrated as comprising a plurality of spools of the reinforcement material roving 22, 24 and 26, fed into a tube 28 as well as the supply of binder 32 and the pump 34. The chopper 20 may comprise one or more spinning elements, including gears and knife blades, for drawing and chopping the roving 22, 26 and flinging the chopped fibers towards the perforate mold part 6. A source of electromagnetic energy, here constituted by a pair of ultraviolet lamps 40 and 42, may be mounted at the distal end of the robot arm 18.

In operation, the chopper 20 draws the roving 22-26, chops the same and flings the chopped fibers toward the perforate mold part 6. Contemporaneously, the binder is sprayed from the spray nozzle 36 to at least partially coat the directed fibers on their way to and/or at the perforate mold part 6. As the fibers are directed to the mold part 6, the mold part 6 is rotated, as indicated by the arrow 38, and the robot is operated to scan all of the inner surfaces of the perforate mold part 6 in conjunction with the rotation thereof so that an even deposition of the fibers to a predetermined thickness is obtained over all of the inner surfaces of the mold part 6.

The preform can be cured at this time or alternately. After application of the fibers to the mold part 6, a preform counter mold is closed by the mold operating mechanism 12 to close the mold part 10 onto the mold part 6 and press the fibrous mat to conform to the desired-dimensional shape of the preform. The mold is constructed so as to allow the application of a controlled atmosphere when it is closed, so as to promote the curing of the anaerobic curing binder. Additionally, the material of the mold may be optionally transmissive to electromagnetic radiation, such as a wire grid and/or a general purpose clear acrylic material which does not contain light blockers. While the mold is closed, an atmosphere promoting the curing of the anaerobic curable binder is applied via the controlled atmosphere source 42'.

At this point, the preform may be employed for molding a structural composite. As such, the mold is opened and the preform is picked up from the mold by another robot or the like (not shown) similar to the robot 14 and placed on a conveyor 60 of the discharge station 5 for transport to storage or to the further molding process.

If the preform is to assume the character of a carrier preform and is to have a subassembly or subassemblies attached thereto, the robot, or another robot, either holds the preform 44 in a desired position or places the same on a work table in the desired position for the attachment of a reinforcement member at the energetic stitching stage 4. Here, the preform 44 is illustrated as residing on a table in the desired position. With the preform in this position, another robot 54 may be operated to apply an electromagnetic energy-curable binder or a thermally curable binder or an anaerobic binder from a reservoir 52 and via a pump 50 through a dispenser or spray nozzle 48 mounted at the distal end of a robot arm 56 of the robot 54, the binder being applied to at least one selected surface of the preform 44 and/or of the subassembly. Then, a reinforcement insert 46 may be placed, as by another robot, into a desired position and into intimate contact with the preform at the selected area having the binder coating thereon. The robot 54 then positions itself to apply the appropriate energy for curing the binder at the selected area by way of an energy source 58. Alternatively, an atmosphere promoting the curing of anaerobic binders may be applied.

The last operation, described above as "energetic stitching" or "anaerobic stitching", may be accomplished any number of times to apply reinforcement members and/or attachment members (engineered structural members) to the preform prior to its use in making a structural composite. After the last subassembly has been energetically stitched or anaerobically stitched thereto, the preform 44 carrying the additional members is moved by another robot (not shown) to the conveyor 60 of the discharge stage 5.

Through the use of other selected binders, the curing thereof may be accomplished by microwave techniques, as disclosed in my aforementioned patent applications, or by electron beam, as disclosed in my US Patent No. 5,217,656. Referring to FIG. 22, the structure and character of a typical preform is illustrated in which the preform 44 comprises a plurality of generally horizontal, or slightly oblique to the horizontal, panels 62 having a plurality of vertical walls 64, 66 extending therefrom along with generally U-shaped profile sections 68, 70, 72. Any other shape can be formed which is consistent with directing the fibers to catching and supporting surfaces which can be defined by inner surfaces, including insert plugs, of the upper and lower mold parts.

Referring to FIG. 20, a process for making a structural composite is illustrated in the form of a flow chart, the process incorporating the directed fiber, directed energy concepts of the present invention. As previously set forth, the roving is drawn from a supply stage 3, chopped with a chopper 20 and directed onto a perforate member having air drawn therethrough via a plenum structure and which is rotatable as indicated by the arrow 38. The chopped fibers directed toward the perforate element are sprayed with a binder emanating from a spray nozzle 36. The rotation of the perforate element and scanning by the chopper 20 and the spray nozzle 36 provides an even coating or mat of binder-coated fibers deposited to a predetermined thickness.

The perforate element is, in the illustrated embodiment, a lower mold part 6 which may have a complementary upper mold part 10 which is moved to close the mold so that the mat of fibers accurately replicates the desired size and shape of the preform. The binder is an anaerobic curable binder, here cured by the application of an atmosphere promoting its curing that is applied via a controlled atmosphere source which is illustrated here as being operably connected to the mold. The mold parts 6 and 10 may be constructed of an electromagnetic radiation-transmissive material, such as grid or a general purpose, clear acrylic material which does not include electromagnetic radiation blockers.

Next, the mold is opened by providing a separation between the mold parts 6 and 10 so that the cured, rigidized three-dimensional preform may be removed. The preform is here referenced 44P, 44CP, in that the preform may now assume the character of a final element 44P for movement by way of the discharge stage 5 to an RTM or SRIM molding process 90, or it may assume the character of a carrier preform 44CP and be moved to an energetic stitching station 4 for the application of subassemblies, such as reinforcement ribs, cores, covers and the like. Station 4 may also be an anaerobic stitching station.

When the station is an energetic stitching station 4, the carrier preform 44CP may have an external rib 74 (and/or an internal rib), a reinforcement corner 76, a core 78 and a cover 80 connected thereto by the application of an electromagnetic energy-curable binder or a thermally curable binder applied from a source 82 to a selected surface area or surface areas of the carrier preform 44CP and/or the rib 74, the corner 76 and the cover 80. The cover 80 will hold the core 78 within the preform 44CP and the core 78 is not necessarily tacked to the carrier preform. The purpose of the core 78 is to save material in the RTM/SRIM later molding process in which the plastic material could migrate through the hollow, porous wall of the preform into the pocket or cavity which would give rise to an excess use of material, an increased weight and an extension of the curing time for the applied plastic.

After the application of the binder and the subassemblies to the carrier preform 44CP, the binder-coated selected areas are subjected to the energy appropriate for curing the binder, for instance by way of energy sources 84, 86, 88. Finally, the stitching produces a structural preform SP which is then transferred by way of the discharge stage 5 to the RTM/SRIM molding process 90.

## Claims

1. A method of making a preform for fiber-reinforced molded articles, comprising:
(a) applying a layer of material comprising reinforcing fibers on a preform mold surface which has a configuration corresponding to at least a portion of a molded article;
(b) adding a composition comprising an anaerobic binder to the reinforcing material so that the fibers are at least partially coated;
**characterised in that** during steps (a) and (b) the interstices between the fibers will remain open; and that
(c) said anaerobic binder is contacted with an atmosphere of one or more inert gases that promotes the curing of said binder.

2. The method of claim 1, wherein said anaerobic binder composition is added to said material prior to the applying of the material to the preform mold surface.

3. The method of claim 1, wherein said preform comprises a screen having a shape conforming to that of the article to be molded.

4. The method of claim 1, wherein the material comprises reinforcing fibers opaque to or not suitable for use with to electromagnetic radiation.

5. The method of claim 1, wherein the material comprises carbon fibers.

6. The method of claim 1, wherein the material comprises aramid fibers.

7. The method of claim 1, wherein the material comprises commingled fibers of two or more materials.

8. The method of claim 7, wherein said commingled fibers comprise glass.

9. The method of claim 7, wherein said commingled fibers comprise matrix resin.

10. The method of claims 1, wherein in step (a) a layer of material comprising reinforcing fibers is applied on a mold surface, and wherein in step (b) a binder composition is added to the material, said composition comprising an anaerobic component and an electromagnetic radiation-curable component or a thermally curable component, and wherein in step (c) said binder composition is contacted with an atmosphere, and wherein step (d) or step (e) are conducted, wherein:
- step (d) comprises exposing said binder composition to electromagnetic radiation that promotes the curing of the electromagnetic radiation-curable component; and
- step (e) comprises exposing said binder composition to thermal energy that promotes the curing of the thermally curable component.

11. The method of claim 10, wherein step (d) occurs prior to step (c).

12. The method of claim 10, wherein step (e) occurs prior to step (c).

13. The method of claim 11, further comprising:
(f) forming the reinforcing material in a three-dimensional shape corresponding to at least a portion of a molded article, wherein step (e) occurs between step (c) and step (d).

14. The method of claim 10, wherein said binder composition is added to said reinforcing material prior to the applying of the reinforcing material to the mold surface.

15. The method of claim 10, wherein said mold surface comprises a shape conforming to that of the article to be molded.

16. The method of claim 10, wherein the reinforcing material comprises fibers opaque to electromagnetic radiation.

17. The method of claim 10, wherein the reinforcing material comprises carbon fibers.

18. The method of claim 10, wherein the reinforcing material comprises aramid fibers.

19. The method of claim 10, wherein the material comprises commingled fibers of two or more materials.

20. The method of claim 19, wherein said commingled fibers comprise glass.

21. The method of claim 19, wherein said commingled fibers comprise matrix resin.

22. The method of one of claims 10 to 21, wherein in step (b) a binder composition is added to the material, said composition comprising a heat-curable component, wherein in step (e) said binder composition is heated to a temperature promoting the curing of the heat-curable component.

23. The method of claim 22, wherein step (e) occurs prior to steps (d).

24. The method of claim 22, wherein step (e) occurs prior to step (c).

25. The method of claim 22, wherein step (d) occurs prior to step (e).

26. The method of claim 22, wherein step (d) occurs prior to step (c).

27. The method of claim 22, wherein step (c) occurs prior to step (e).

28. The method of claim 22, wherein step (c) occurs prior to step (d).

29. The method of claim 22, further comprising:
(f) forming the reinforcing material in a three-dimensional shape corresponding to at least a portion of a molded article, wherein said step (f) occurs at a point in time selected from between step (e) and step (d), between step (e) and step (c) and between step (d) and step (c).

30. The method of claim 22, wherein said binder composition is added to said reinforcing material prior to the applying of the reinforcing material to the preform mold surface.

31. The method of claim 22,, wherein said mold surface comprises a shape conforming to that of the article to be molded.

32. The method of claim 22, wherein said material comprises reinforcing fibers that are opaque to electromagnetic radiation.

33. The method of claim 22, wherein said material comprises carbon reinforcing fibers.

34. The method of claim 22, wherein said material comprises aramid reinforcing fibers.

35. The method of claim 22, wherein the material comprises commingled fibers of two or more materials.

36. The method of claim 35, wherein said commingled fibers comprise glass.

37. The method of claim 35, wherein said commingled fibers comprise matrix resin.

38. A method of manufacturing a preform, comprising the steps of:
(a) moving a plurality of webs of fibrous reinforcing material along respective paths and guiding the webs superposed such that they superpose parallel to one another at a predetermined location and travel parallel to and in contact with one another;
(b) applying a binder to at least one surface of each pair of facing surfaces of the webs upstream of the predetermined location, wherein said binder comprises an electromagnetic radiation-curable component and an anaerobic component;
(c) locally applying electromagnetic radiation into selected spaced locations of the parallel contacting webs to cure the electromagnetic radiation-curable binder at the spaced locations and thereby tack the webs together;
(d) cutting a blank from the tacked webs;
(e) forming the blank in a three-dimensional shape corresponding to at least a portion of the preform; and
(f) contacting the blank with an atmosphere of one or more inert gases that promotes the curing of the anaerobic binder.

39. The method of claim 38, further comprising:
(g) applying electromagnetic radiation to the blank to cure remaining uncured electromagnetic radiation-curable binder.

40. The method of claim 38, wherein the step (e) of forming is further defined as:
(e1) placing the blank between first and second shaped parts of a tool, which parts are shaped to replicate the desired three-dimensional shape of the preform; and
(e2) pressing the two parts of the tool together to shape the blank while contacting the blank with an atmosphere that promotes the curing of the anaerobic binder in the step (f).

41. The method of claim 38, wherein the step (b) of applying the binder is further defined as:
(b1) spraying the binder on at least one surface of each pair of facing surfaces of the webs upstream of the predetermined location.

42. The method of claim 38, wherein the step (b) of applying the electromagnetic radiation-curable binder is further defined as:
(b2) contacting the webs of fibrous reinforcing material with the electromagnetic radiation-curable binder while said webs are in their respective paths as defined in step (a).

43. The method of claim 38, wherein the step (b) of applying the anaerobic binder is further defined as:
(b3) spraying the anaerobic binder on both surfaces of each pair of facing surfaces of the webs upstream of the predetermined location.

44. The method of claim 38, further comprising:
(h) pressing the webs together to spread one or more of the electromagnetic radiation-curable binder and the anaerobic binder.

45. The method of claim 38, wherein the electromagnetic radiation of step (c) is **characterized by** one or more frequencies in the microwave range.

46. The method of claim 38, wherein step (b) is further defined as:
(b5) applying an ultraviolet radiation-curable binder to the at least one facing surface of each pair of facing surfaces on the webs.

47. The method of claim 38, wherein the electromagnetic radiation of step (c) is in the ultraviolet range.

48. The method of claim 38, wherein step (c) is further defined as:
(c1) generating electromagnetic radiation with an electromagnetic radiation source;
(c2) moving the source across the webs; and
(c3) periodically transmitting the electromagnetic radiation from the source to the webs.

49. The method of claim 48, wherein the electromagnetic radiation is **characterized by** one or more frequencies in the microwave range.

50. The method of claim 48, wherein the electromagnetic radiation comprises light energy at all usable cure initiation wavelengths.

51. The method of claim 38, further comprising the steps of:
(i) applying a heat-curable binder to at least one surface of each pair of facing surfaces of the webs.

52. The method of one of claims 38 to 51, wherein the step (b) of applying the binder is further defined as:
(b6) applying an electromagnetic radiation-curable binder or a thermally curable binder to one surface of each pair of facing surfaces of the webs upstream of the predetermined location and applying an anaerobic binder to at least the other surface of each pair of facing surfaces of the webs.

53. A method of making a preform comprising the steps of:
(a) applying a two-stage binder to a mat of fiber reinforcement material, wherein the two-stage binder comprises a first binder component and a second binder component, wherein the first binder component is electromagnetic radiation-curable binder component or a thermally curable binder component, and the second binder component is an anaerobic binder component;
(b) exposing the two-stage binder to electromagnetic radiation that promotes the curing of the electromagnetic radiation-curable binder component or exposing the two-stage binder to thermal energy that promotes the curing of the thermally curable binder component;
(c) forming the mat into a desired shape; and
(d) exposing the mat to an atmosphere of one or more inert gases promoting the curing of the anaerobic binder component.

54. The method of claim 53, wherein the first binder component is curable by electromagnetic radiation in the ultraviolet range.

55. The method of claim 53, wherein the first binder component is curable by electromagnetic radiation in the visible range.

56. The method of claim 53, wherein the first binder component is curable by one or more of electromagnetic radiation with wavelengths in the microwave range, electromagnetic radiation in the infrared range, laser light, thermal energy and any combination thereof.

57. The method of claim 53, wherein step (a) is further defined as:
(a1) applying the two-stage binder in a range of 2% to 8% by weight of the reinforcing material.

58. The method of claim 53, wherein step (d) is further defined as
(d1) exposing the mat to an atmosphere promoting the curing of the anaerobic binder until a rigid preform is obtained.

59. The method of claim 53, further comprising the steps of:
(e) placing the rigid preform in a mold;
(f) applying deformable plastic material to the preform;
(g) curing the plastic material.

60. The method of claim 53, wherein the second binder component comprises one or more resins, one or more monomers, one or more initiators and one or more inhibitors.

61. The method of claim 53, wherein the second binder component further comprises one or more hydroperoxides.

62. The method of claim 53, wherein the resins comprise epoxymethacrylate.

63. The method of claim 60, wherein the monomers are selected from methacrylate monomers, polyhydric alcohols, ester alcohols and any combinations thereof.

64. The method of claim 60, wherein the monomers are selected from alkyl hydroxyls, beta carboxy ethyl acrylate, methacrylic acid, acrylic acid, dimer of acrylic acid, trimer of acrylic acid, tetramer of acrylic acid, pentamer of acrylic acid, hydroxy ethyl methacrylate, hydroxy propyl methacrylate, hydroxy ethyl acrylate, hydroxy propyl acrylate and hydroxy butyl acrylate.

65. The method of claim 60, wherein the second stage binder component is comprised of two components, wherein the first component comprises the inhibitors and the second component comprises the initiators.

66. A method for making a rigid three-dimensional structural preform using a separable mold including a perforate first mold part and a pressing second mold part, the mold parts, when closed, together defining a desired three-dimensional shape of the preform and including inner surfaces disposed at angles with respect to one another forming inside and outside corners, comprising the steps of:
(a) cutting fibers of reinforcement material;
(b) propelling the cut fibers onto the perforate first mold part while contemporaneously flowing air through the first mold part to direct the fibers onto all surfaces of the first mold part to a predetermined thickness;
(c) applying an anaerobic binder onto the cut fibers to at least partially coat the fibers with the binder, without filling interstices among the fibers;
(d) closing the separable mold parts to press the binder-coated cut fibers into the desired three-dimensional shape of the preform between the pressing second mold part and the perforate first mold part of the closed mold;
(e) applying to the anaerobic binder an atmosphere of one or more inert gases that promotes the curing of said binder.

67. The method of claim 66, further comprising the step of:
(f) rotating the first mold part during the steps (b) and (c) of propelling the cut fibers and spraying anaerobic binder to ensure complete areal coverage of the inner surfaces of the first mold part.

68. The method of claim 66, wherein the step (b) of applying anaerobic binder is further defined as
(b1) spraying said binder.

69. The method of claim 68, wherein the step (b1) of spraying anaerobic binder is further defined as:
(b2) spraying the binder simultaneously during the step (a) of propelling the cut fibers.

70. The method of claim 66, wherein the step (a) of cutting fibers of reinforcement material is further defined as:
(a1) drawing roving of reinforcement material from at least one spool; and
(a2) chopping the drawn roving into short fibers for propulsion.

71. The method of claim 66, further comprising the steps of:
(g) applying an electromagnetic energy-curable binder to at least one selected area of the preform;
(h) moving a subassembly into intimate contact with the preform at the at least one selected binder-coated area; and
(i) radiating electromagnetic energy onto the at least one selected binder-coated area to cure the binder and attach the subassembly to the preform.

72. The method of claim 66, further comprising the steps of:
(g) applying an electromagnetic energy-curable binder to at least one selected area of the preform;
(h) moving a reinforcement subassembly into intimate contact with the preform at the at least one selected binder-coated area; and
(i) radiating electromagnetic energy onto the at least one selected binder-coated area to cure the binder and attach the subassembly to the preform.

73. The method of claim 66, further comprising the steps of:
(j) applying an anaerobic binder to at least one selected area of the preform;
(k) moving a subassembly into intimate contact with the preform at the at least one selected binder-coated area; and
(I) contacting said anaerobic binder with an atmosphere that promotes the curing of said binder onto the at least one selected binder-coated area to cure the binder and attach the subassembly to the preform.

74. The method of claim 66, wherein the steps (c) and (e) of spraying binder and applying an atmosphere promoting the curing of the anaerobic binder are respectively further defined as:
(c1) spraying an anaerobic binder onto the cut fibers.

75. The method of claim 66, wherein the separable mold comprises an electromagnetic energy-transmissive material and further comprising the steps of:
(m) applying an electromagnetic radiation-curable binder onto the cut fibers to at least partially coat the fibers with the binder, optionally without filling interstices among the fibers;
(n) applying electromagnetic radiation to said fibers.

76. The method of claim 10, wherein steps (a) to (d) are conducted to obtain a rigid three-dimensional structural preform.

77. The method of claim 76, wherein the binder composition of step (b) further comprises a heat-curable binder component.

78. The method of claim 76, wherein the fibers deposited on the mold portion comprise continuous fibers.

79. The method of claim 76, wherein the fibers deposited on the mold portion comprise chopped fibers.

80. The method of claim 76, wherein step (a) and step (b) take place simultaneously.

81. The method of claim 76, wherein step (c) takes place prior to step (d).

82. The method of claim 76, wherein the step (b) of applying the binder composition is further defined as
(b1) spraying said binder.

83. The method of claim 76, further comprising the step of:
(e1) laying a veil on the mold portion, wherein step (e1) takes place prior to step (a).

84. The method of claim 76, further comprising the step of:
(e2) laying a veil on the mold portion, wherein step (e2) takes place after step (b).

85. The method of claim 76, further comprising the steps of:
(f) applying an electromagnetic energy-curable binder to at least one selected area of the preform;
(g) moving a subassembly into intimate contact with the preform at the at least one selected binder-coated area; and
(h) radiating electromagnetic energy onto the at least one selected binder-coated area to cure the binder and attach the subassembly to the preform.

86. The method of claim 76, further comprising the steps of:
(i) applying an electromagnetic energy-curable binder to at least one selected area of the preform;
(j) moving a reinforcement subassembly into intimate contact with the preform at the at least one selected binder-coated area; and
(k) radiating electromagnetic energy onto the at least one selected binder-coated area to cure the binder and attach the subassembly to the preform.

87. The method of claim 76, further comprising the steps of:
(I) applying an anaerobic binder to at least one selected area of the preform;
(m) moving a subassembly into intimate contact with the preform at the at least one selected binder-coated area; and
(n) contacting said anaerobic binder with an atmosphere that promotes the curing of said binder onto the at least one selected binder-coated area to cure the binder and attach the subassembly to the preform.

88. The method of claim 76, further comprising the steps of:
(o) applying an anaerobic binder to at least one selected area of the preform;
(p) moving a reinforcement subassembly into intimate contact with the preform at the at least one selected binder-coated area; and
(q) contacting said anaerobic binder with an atmosphere that promotes the curing of said binder onto the at least one selected binder-coated area to cure the binder and attach the subassembly to the preform.

89. The method of claim 1, wherein said anaerobic binder comprises one or more resins, one or more monomers, one or more hydroperoxides, one or more initiators and one or more inhibitors.

90. The method of claim 89, wherein said anaerobic binder comprises 15% by weight to 55% by weight of epoxymethacrylate resin.

91. The method of claim 89, wherein said anaerobic binder comprises 45% by weight to 85% by weight of monomers selected from methacrylate monomers, polyhydric alcohols, ester alcohols or a mixture thereof.

92. The method of claim 89, wherein said anaerobic binder comprises from 0% by weight to 5% by weight of hydroperoxides.

93. The method of claim 89, wherein said anaerobic binder comprises from 0% by weight to 4% by weight of accelerators.

94. The method of claim 89, wherein said anaerobic binder comprises from 0% to 0.1% by weight of inhibitors.

95. The method of claim 53, further comprising the step of:
(e1) applying a veil to one side of said mat of fiber reinforcement material.

96. The method of claim 53, further comprising the step of:
(e2) applying a veil to both sides of said mat of reinforcement material.

## Patentansprüche

1. Verfahren zur Herstellung eines Vorformlings für faserverstärkte Formkörper, umfassend:
(a) Aufbringen einer Materialschicht mit Verstärkungsfasern auf eine Vorformlingsformoberfläche, die eine Konfiguration aufweist, die wenigstens einem Abschnitt eines Formkörpers entspricht;
(b) Zugeben einer Zusammensetzung, die ein anaerobes Bindemittel umfasst, zu dem Verstärkungsmaterial, so dass die Fasern wenigstens teilweise beschichtet sind;
**dadurch gekennzeichnet, dass** während der Schritte (a) und (b) die Zwischenräume zwischen den Fasern offen bleiben; und dass
(c) das anaerobe Bindemittel mit einer Atmosphäre aus einem oder mehreren inerten Gasen in Kontakt gebracht wird, welche die Aushärtung des Bindemittels fördert.

2. Verfahren nach Anspruch 1, wobei die anaerobe Bindemittelzusammensetzung dem Material vor dem Aufbringen des Materials auf die Vorformlingsformoberfläche zugegeben wird.

3. Verfahren nach Anspruch 1, wobei der Vorformling ein Sieb mit einer Form umfasst, die der des zu formenden Körpers entspricht.

4. Verfahren nach Anspruch 1, wobei das Material Verstärkungsfasern umfasst, die für elektromagnetische Strahlung undurchlässig sind oder sich nicht zur Verwendung mit elektromagnetischer Strahlung eignen.

5. Verfahren nach Anspruch 1, wobei das Material Carbonfasern umfasst.

6. Verfahren nach Anspruch 1, wobei das Material Aramidfasern umfasst.

7. Verfahren nach Anspruch 1, wobei das Material vermischte Fasern aus zwei oder mehr Materialien umfasst.

8. Verfahren nach Anspruch 7, wobei die vermischten Fasern Glas umfassen.

9. Verfahren nach Anspruch 7, wobei die vermischten Fasern Matrixharz umfassen.

10. Verfahren nach Anspruch 1, wobei in Schritt (a) eine Schicht aus Material mit Verstärkungsfasern auf eine Formoberfläche aufgebracht wird, und wobei in Schritt (b) dem Material eine Bindemittelzusammensetzung zugegeben wird, wobei die Zusammensetzung eine anaerobe Komponente und eine durch elektromagnetische Strahlung härtbare Komponente oder eine thermisch härtbare Komponente umfasst, und wobei in Schritt (c) die Bindemittelzusammensetzung mit einer Atmosphäre in Kontakt gebracht wird, und wobei Schritt (d) oder Schritt (e) durchgeführt wird, wobei:
- Schritt (d) umfasst, dass die Bindemittelzusammensetzung elektromagnetischer Strahlung ausgesetzt wird, welche die Aushärtung der durch elektromagnetische Strahlung härtbaren Komponente fördert; und
- Schritt (e) umfasst, dass die Bindemittelzusammensetzung thermischer Energie ausgesetzt wird, welche die Aushärtung der thermisch härtbaren Komponente fördert.

11. Verfahren nach Anspruch 10, wobei Schritt (d) vor Schritt (c) erfolgt.

12. Verfahren nach Anspruch 10, wobei Schritt (e) vor Schritt (c) erfolgt.

13. Verfahren nach Anspruch 11, ferner umfassend:
(f) Formen des Verstärkungsmaterials zu einer dreidimensionalen Form, die wenigstens einem Abschnitt eines Formkörpers entspricht, wobei Schritt (e) zwischen Schritt (c) und Schritt (d) erfolgt.

14. Verfahren nach Anspruch 10, wobei die Bindemittelzusammensetzung dem Verstärkungsmaterial vor dem Aufbringen des Verstärkungsmaterials auf die Formoberfläche zugegeben wird.

15. Verfahren nach Anspruch 10, wobei die Formoberfläche eine Form aufweist, die der des zu formenden Körpers entspricht.

16. Verfahren nach Anspruch 10, wobei das Verstärkungsmaterial Fasern umfasst, die für elektromagnetische Strahlung undurchlässig sind.

17. Verfahren nach Anspruch 10, wobei das Verstärkungsmaterial Carbonfasern umfasst.

18. Verfahren nach Anspruch 10, wobei das Verstärkungsmaterial Aramidfasern umfasst.

19. Verfahren nach Anspruch 10, wobei das Material vermischte Fasern aus zwei oder mehr Materialien umfasst.

20. Verfahren nach Anspruch 19, wobei die vermischten Fasern Glas umfassen.

21. Verfahren nach Anspruch 19, wobei die vermischten Fasern Matrixharz umfassen.

22. Verfahren nach einem der Ansprüche 10 bis 21, wobei in Schritt (b) dem Material eine Bindemittelzusammensetzung zugegeben wird, wobei die Zusammensetzung eine wärmehärtbare Komponente umfasst, wobei in Schritt (e) die Bindemittelzusammensetzung auf eine Temperatur erhitzt wird, welche die Aushärtung der wärmehärtbaren Komponente fördert.

23. Verfahren nach Anspruch 22, wobei Schritt (e) vor Schritt (d) erfolgt.

24. Verfahren nach Anspruch 22, wobei Schritt (e) vor Schritt (c) erfolgt.

25. Verfahren nach Anspruch 22, wobei Schritt (d) vor Schritt (e) erfolgt.

26. Verfahren nach Anspruch 22, wobei Schritt (d) vor Schritt (c) erfolgt.

27. Verfahren nach Anspruch 22, wobei Schritt (c) vor Schritt (e) erfolgt.

28. Verfahren nach Anspruch 22, wobei Schritt (c) vor Schritt (d) erfolgt.

29. Verfahren nach Anspruch 22, ferner umfassend:
(f) Formen des Verstärkungsmaterials zu einer dreidimensionalen Form, die wenigstens einem Abschnitt eines Formkörpers entspricht, wobei Schritt (f) zu einem Zeitpunkt erfolgt, der ausgewählt ist aus: zwischen Schritt (e) und Schritt (d), zwischen Schritt (e) und Schritt (c) und zwischen Schritt (d) und Schritt (c).

30. Verfahren nach Anspruch 22, wobei die Bindemittelzusammensetzung dem Verstärkungsmaterial vor dem Aufbringen des Verstärkungsmaterials auf die Vorformlingsformoberfläche zugegeben wird.

31. Verfahren nach Anspruch 22, wobei die Formoberfläche eine Form aufweist, die der des zu formenden Körpers entspricht.

32. Verfahren nach Anspruch 22, wobei das Material Verstärkungsfasern umfasst, die für elektromagnetische Strahlung undurchlässig sind.

33. Verfahren nach Anspruch 22, wobei das Material Carbonverstärkungsfasern umfasst.

34. Verfahren nach Anspruch 22, wobei das Material Aramidverstärkungsfasern umfasst.

35. Verfahren nach Anspruch 22, wobei das Material vermischte Fasern aus zwei oder mehr Materialien umfasst.

36. Verfahren nach Anspruch 35, wobei die vermischten Fasern Glas umfassen.

37. Verfahren nach Anspruch 35, wobei die vermischten Fasern Matrixharz umfassen.

38. Verfahren zur Herstellung eines Vorformlings, umfassend die folgenden Schritte:
(a) Bewegen einer Vielzahl von Bahnen aus faserigem Verstärkungsmaterial entlang entsprechender Pfade und Führen der Bahnen in gegenseitiger Überlagerung, so dass sie an einer vorbestimmten Stelle parallel übereinanderliegen und sich parallel zueinander und in Kontakt miteinander bewegen;
(b) Aufbringen eines Bindemittels auf wenigstens eine Oberfläche jedes Paares einander gegenüberliegender Flächen der Bahnen stromaufwärts der vorbestimmten Stelle, wobei das Bindemittel eine durch elektromagnetische Strahlung härtbare Komponente und eine anaerobe Komponente umfasst;
(c) örtliche Anwendung von elektromagnetischer Strahlung an ausgewählten beabstandeten Stellen der parallelen sich berührenden Bahnen, um das durch elektromagnetische Strahlung härtbare Bindemittel an den beabstandeten Stellen auszuhärten und dadurch die Bahnen zusammenzuheften;
(d) Schneiden eines Rohlings aus den gehefteten Bahnen;
(e) Formen des Rohlings zu einer dreidimensionalen Form, die wenigstens einem Abschnitt des Vorformlings entspricht; und
(f) Inkontaktbringen des Rohlings mit einer Atmosphäre aus einem oder mehreren inerten Gasen, welche die Aushärtung des anaeroben Bindemittels fördert.

39. Verfahren nach Anspruch 38, ferner umfassend:
(g) Anwendung von elektromagnetischer Strahlung auf den Rohling, um das restliche unausgehärtete durch elektromagnetische Strahlung härtbare Bindemittel auszuhärten.

40. Verfahren nach Anspruch 38, wobei der Schritt (e) der Formung ferner definiert ist als:
(e1) Platzieren des Rohlings zwischen ersten und zweiten geformten Teilen eines Werkzeugs, wobei die Teile so geformt sind, dass sie die gewünschte dreidimensionale Form des Vorformlings nachbilden; und
(e2) Zusammendrücken der beiden Teile des Werkzeugs, um den Rohling zu formen, während der Rohling mit einer Atmosphäre in Kontakt gebracht wird, welche die Aushärtung des anaeroben Bindemittels in Schritt (f) fördert.

41. Verfahren nach Anspruch 38, wobei der Schritt (b) des Aufbringens des Bindemittels ferner definiert ist als:
(b1) Sprühen des Bindemittels auf wenigstens eine Oberfläche jedes Paares einander gegenüberliegender Flächen der Bahnen stromaufwärts der vorbestimmten Stelle.

42. Verfahren nach Anspruch 38, wobei der Schritt (b) des Aufbringens des durch elektromagnetische Strahlung härtbaren Bindemittels ferner definiert ist als:
(b2) Inkontaktbringen der Bahnen aus faserigem Verstärkungsmaterial mit dem durch elektromagnetische Strahlung härtbaren Bindemittel, während sich die Bahnen auf ihren jeweiligen Pfaden befinden, wie in Schritt (a) definiert.

43. Verfahren nach Anspruch 38, wobei der Schritt (b) des Aufbringens des anaeroben Bindemittels ferner definiert ist als:
(b3) Sprühen des anaeroben Bindemittels auf beide Oberflächen jedes Paares einander gegenüberliegender Flächen der Bahnen stromaufwärts der vorbestimmten Stelle.

44. Verfahren nach Anspruch 38, ferner umfassend:
(h) Zusammendrücken der Bahnen, um das durch elektromagnetische Strahlung härtbare Bindemittel und/oder das anaerobe Bindemittel zu verteilen.

45. Verfahren nach Anspruch 38, wobei die elektromagnetische Strahlung von Schritt (c) durch eine oder mehrere Frequenzen im Mikrowellenbereich gekennzeichnet ist.

46. Verfahren nach Anspruch 38, wobei Schritt (b) ferner definiert ist als:
(b5) Aufbringen eines durch UV-Strahlung härtbaren Bindemittels auf die wenigstens eine gegenüberliegende Fläche jedes Paares einander gegenüberliegender Flächen auf den Bahnen.

47. Verfahren nach Anspruch 38, wobei die elektromagnetische Strahlung von Schritt (c) im ultravioletten Bereich liegt.

48. Verfahren nach Anspruch 38, wobei Schritt (c) ferner definiert ist als:
(c1) Erzeugung elektromagnetischer Strahlung mit einer elektromagnetischen Strahlungsquelle;
(c2) Bewegen der Quelle über die Bahnen hinweg; und
(c3) periodische Übertragung der elektromagnetischen Strahlung von der Quelle auf die Bahnen.

49. Verfahren nach Anspruch 48, wobei die elektromagnetische Strahlung durch eine oder mehrere Frequenzen im Mikrowellenbereich gekennzeichnet ist.

50. Verfahren nach Anspruch 48, wobei die elektromagnetische Strahlung Lichtenergie mit allen verwendbaren die Aushärtung initiierenden Wellenlängen umfasst.

51. Verfahren nach Anspruch 38, ferner umfassend den folgenden Schritt:
(i) Aufbringen eines wärmehärtbaren Bindemittels auf wenigstens eine Oberfläche jedes Paares einander gegenüberliegender Flächen der Bahnen.

52. Verfahren nach einem der Ansprüche 38 bis 51, wobei der Schritt (b) des Aufbringens des Bindemittels ferner definiert ist als:
(b6) Aufbringen eines durch elektromagnetische Strahlung härtbaren Bindemittels oder eines thermisch härtbaren Bindemittels auf eine Oberfläche jedes Paares einander gegenüberliegender Flächen der Bahnen stromaufwärts der vorbestimmten Stelle und Aufbringen eines anaeroben Bindemittels auf wenigstens die andere Oberfläche jedes Paares einander gegenüberliegender Flächen der Bahnen.

53. Verfahren zur Herstellung eines Vorformlings, umfassend die folgenden Schritte:
(a) Aufbringen eines zweistufigen Bindemittels auf eine Matte aus Faserverstärkungsmaterial, wobei das zweistufige Bindemittel eine erste Bindemittelkomponente und eine zweite Bindemittelkomponente umfasst, wobei die erste Bindemittelkomponente eine durch elektromagnetische Strahlung härtbare Bindemittelkomponente oder eine thermisch härtbare Bindemittelkomponente ist und die zweite Bindemittelkomponente eine anaerobe Bindemittelkomponente ist;
(b) Aussetzen des zweistufigen Bindemittels elektromagnetischer Strahlung, welche die Aushärtung der durch elektromagnetische Strahlung härtbaren Bindemittelkomponente fördert, oder Aussetzen des zweistufigen Bindemittels thermischer Energie, welche die Aushärtung der thermisch härtbaren Bindemittelkomponente fördert;
(c) Formen der Matte zu einer gewünschten Form; und
(d) Aussetzen der Matte einer Atmosphäre aus einem oder mehreren inerten Gasen, welche die Aushärtung der anaeroben Bindemittelkomponente fördert.

54. Verfahren nach Anspruch 53, wobei die erste Bindemittelkomponente durch elektromagnetische Strahlung im ultravioletten Bereich härtbar ist.

55. Verfahren nach Anspruch 53, wobei die erste Bindemittelkomponente durch elektromagnetische Strahlung im sichtbaren Bereich härtbar ist.

56. Verfahren nach Anspruch 53, wobei die erste Bindemittelkomponente durch eines oder mehreres aus elektromagnetischer Strahlung mit Wellenlängen im Mikrowellenbereich, elektromagnetischer Strahlung im Infrarotbereich, Laserlicht, thermischer Energie und jede Kombination davon härtbar ist.

57. Verfahren nach Anspruch 53, wobei Schritt (a) ferner definiert ist als:
(a1) Aufbringen des zweistufigen Bindemittels in einem Bereich von 2 bis 8 Gew.-% des Verstärkungsmaterials.

58. Verfahren nach Anspruch 53, wobei Schritt (d) ferner definiert ist als
(d1) Aussetzen der Matte einer Atmosphäre, welche die Aushärtung des anaeroben Bindemittels fördert, bis ein starrer Vorformling erhalten wird.

59. Verfahren nach Anspruch 53, ferner umfassend die folgenden Schritte:
(e) Platzieren des starren Vorformlings in einer Form;
(f) Aufbringen von verformbarem Kunststoffmaterial auf den Vorformling;
(g) Aushärtung des Kunststoffmaterials.

60. Verfahren nach Anspruch 53, wobei die zweite Bindemittelkomponente ein oder mehrere Harze, ein oder mehrere Monomere, einen oder mehrere Initiatoren und einen oder mehrere Inhibitoren umfasst.

61. Verfahren nach Anspruch 53, wobei die zweite Bindemittelkomponente außerdem ein oder mehrere Hydroperoxide umfasst.

62. Verfahren nach Anspruch 53, wobei die Harze Epoxymethacrylat umfassen.

63. Verfahren nach Anspruch 60, wobei die Monomere aus Methacrylatmonomeren, mehrwertigen Alkoholen, Esteralkoholen und beliebigen Kombinationen davon ausgewählt sind.

64. Verfahren nach Anspruch 60, wobei die Monomere aus Alkylhydroxylen, beta-Carboxyethylacrylat, Methacrylsäure, Acrylsäure, Dimer von Acrylsäure, Trimer von Acrylsäure, Tetramer von Acrylsäure, Pentamer von Acrylsäure, Hydroxyethylmethacrylat, Hydroxypropylmethacrylat, Hydroxyethylacrylat, Hydroxypropylacrylat und Hydroxybutylacrylat ausgewählt sind.

65. Verfahren nach Anspruch 60, wobei die Bindemittelkomponente der zweiten Stufe aus zwei Komponenten besteht, wobei die erste Komponente die Inhibitoren und die zweite Komponente die Initiatoren umfasst.

66. Verfahren zur Herstellung eines starren Vorformlings von dreidimensionaler Struktur unter Verwendung einer trennbaren Form, die ein perforiertes erstes Formelement und ein pressendes zweites Formelement umfasst, wobei die Formelemente, wenn sie geschlossen sind, zusammen eine gewünschte dreidimensionale Form des Vorformlings definieren und Innenflächen aufweisen, die in Winkeln zueinander angeordnet sind und Innen- und Außenecken bilden, umfassend die folgenden Schritte:
(a) Schneiden von Fasern aus Verstärkungsmaterial;
(b) Treiben der geschnittenen Fasern auf das perforierte erste Formelement, während gleichzeitig Luft durch das erste Formelement strömt, um die Fasern bis zu einer vorbestimmten Dicke auf alle Oberflächen des ersten Formelements zu lenken;
(c) Aufbringen eines anaeroben Bindemittels auf die geschnittenen Fasern, um die Fasern wenigstens teilweise mit dem Bindemittel zu überziehen, ohne Zwischenräume zwischen den Fasern auszufüllen;
(d) Schließen der trennbaren Formelemente, um die mit Bindemittel überzogenen geschnittenen Fasern zwischen dem pressenden zweiten Formelement und dem perforierten ersten Formelement der geschlossenen Form in die gewünschte dreidimensionale Form des Vorformlings zu pressen;
(e) Anwendung einer Atmosphäre aus einem oder mehreren inerten Gasen, welche die Aushärtung des Bindemittels fördert, auf das anaerobe Bindemittel.

67. Verfahren nach Anspruch 66, ferner umfassend den folgenden Schritt:
(f) Drehen des ersten Formelements während der Schritte (b) und (c) des Treibens der geschnittenen Fasern und des Sprühens eines anaeroben Bindemittels, um eine vollständige Flächenabdeckung der inneren Oberflächen des ersten Formelements sicherzustellen.

68. Verfahren nach Anspruch 66, wobei der Schritt (b) des Aufbringens eines anaeroben Bindemittels ferner definiert ist als:
(b1) Aufsprühen des Bindemittels.

69. Verfahren nach Anspruch 68, wobei der Schritt (b1) des Aufsprühens eines anaeroben Bindemittels ferner definiert ist als:
(b2) gleichzeitiges Aufsprühen des Bindemittels während des Schritts (a) des Treibens der geschnittenen Fasern.

70. Verfahren nach Anspruch 66, wobei der Schritt (a) des Schneidens von Fasern aus Verstärkungsmaterial ferner definiert ist als:
(a1) Abziehen von Roving aus Verstärkungsmaterial von wenigstens einer Spule; und
(a2) Häckseln des abgezogenen Rovings in kurze Fasern für das Treiben.

71. Verfahren nach Anspruch 66, ferner umfassend die folgenden Schritte:
(g) Aufbringen eines durch elektromagnetische Energie härtbaren Bindemittels auf wenigstens eine ausgewählte Fläche des Vorformlings;
(h) Bewegen einer Unterbaugruppe in innigen Kontakt mit dem Vorformling an der wenigstens einen ausgewählten bindemittelbeschichteten Fläche; und
(i) Abstrahlen von elektromagnetischer Energie auf die wenigstens eine ausgewählte bindemittelbeschichtete Fläche, um das Bindemittel auszuhärten und die Unterbaugruppe an dem Vorformling zu befestigen.

72. Verfahren nach Anspruch 66, ferner umfassend die folgenden Schritte:
(g) Aufbringen eines durch elektromagnetische Energie härtbaren Bindemittels auf wenigstens eine ausgewählte Fläche des Vorformlings;
(h) Bewegen einer Verstärkungsunterbaugruppe in innigen Kontakt mit dem Vorformling an der wenigstens einen ausgewählten bindemittelbeschichteten Fläche; und
(i) Abstrahlen von elektromagnetischer Energie auf die wenigstens eine ausgewählte bindemittelbeschichtete Fläche, um das Bindemittel auszuhärten und die Unterbaugruppe an dem Vorformling zu befestigen.

73. Verfahren nach Anspruch 66, ferner umfassend die folgenden Schritte:
(j) Aufbringen eines anaeroben Bindemittels auf wenigstens eine ausgewählte Fläche des Vorformlings;
(k) Bewegen einer Unterbaugruppe in innigen Kontakt mit dem Vorformling an der wenigstens einen ausgewählten bindemittelbeschichteten Fläche; und
(l) Inkontaktbringen des anaeroben Bindemittels mit einer Atmosphäre, welche die Aushärtung des Bindemittels auf der wenigstens einen ausgewählten bindemittelbeschichteten Fläche fördert, um das Bindemittel auszuhärten und die Unterbaugruppe an dem Vorformling zu befestigen.

74. Verfahren nach Anspruch 66, wobei die Schritte (c) und (e) des Aufsprühens von Bindemittel und der Anwendung einer die Aushärtung des anaeroben Bindemittels fördernden Atmosphäre jeweils ferner definiert sind als:
(c1) Aufsprühen eines anaeroben Bindemittels auf die geschnittenen Fasern.

75. Verfahren nach Anspruch 66, bei dem die trennbare Form ein für elektromagnetische Energie durchlässiges Material umfasst und das ferner die folgenden Schritte umfasst:
(m) Aufbringen eines durch elektromagnetische Strahlung härtbaren Bindemittels auf die geschnittenen Fasern, um die Fasern wenigstens teilweise mit dem Bindemittel zu überziehen, gegebenenfalls ohne Zwischenräume zwischen den Fasern auszufüllen;
(n) Anwendung von elektromagnetischer Strahlung auf die Fasern.

76. Verfahren nach Anspruch 10, wobei die Schritte (a) bis (d) durchgeführt werden, um einen starren Vorformling von dreidimensionaler Struktur zu erhalten.

77. Verfahren nach Anspruch 76, wobei die Bindemittelzusammensetzung von Schritt (b) außerdem eine wärmehärtbare Bindemittelkomponente umfasst.

78. Verfahren nach Anspruch 76, wobei die auf dem Formabschnitt aufgebrachten Fasern Endlosfasern umfassen.

79. Verfahren nach Anspruch 76, wobei die auf dem Formabschnitt aufgebrachten Fasern gehäckselte Fasern umfassen.

80. Verfahren nach Anspruch 76, wobei Schritt (a) und Schritt (b) gleichzeitig erfolgen.

81. Verfahren nach Anspruch 76, wobei Schritt (c) vor Schritt (d) erfolgt.

82. Verfahren nach Anspruch 76, wobei der Schritt (b) des Aufbringens der Bindemittelzusammensetzung ferner definiert ist als:
(b1) Aufsprühen des Bindemittels.

83. Verfahren nach Anspruch 76, ferner umfassend den folgenden Schritt:
(e1) Ablegen eines Schleiers auf dem Formabschnitt, wobei Schritt (e1) vor Schritt (a) erfolgt.

84. Verfahren nach Anspruch 76, ferner umfassend den folgenden Schritt:
(e2) Ablegen eines Schleiers auf dem Formabschnitt, wobei Schritt (e2) nach Schritt (b) erfolgt.

85. Verfahren nach Anspruch 76, ferner umfassend die folgenden Schritte:
(f) Aufbringen eines durch elektromagnetische Energie härtbaren Bindemittels auf wenigstens eine ausgewählte Fläche des Vorformlings;
(g) Bewegen einer Unterbaugruppe in innigen Kontakt mit dem Vorformling an der wenigstens einen ausgewählten bindemittelbeschichteten Fläche; und
(h) Abstrahlen von elektromagnetischer Energie auf die wenigstens eine ausgewählte bindemittelbeschichtete Fläche, um das Bindemittel auszuhärten und die Unterbaugruppe an dem Vorformling zu befestigen.

86. Verfahren nach Anspruch 76, ferner umfassend die folgenden Schritte:
(i) Aufbringen eines durch elektromagnetische Energie härtbaren Bindemittels auf wenigstens eine ausgewählte Fläche des Vorformlings;
(j) Bewegen einer Verstärkungsunterbaugruppe in innigen Kontakt mit dem Vorformling an der wenigstens einen ausgewählten bindemittelbeschichteten Fläche; und
(k) Abstrahlen von elektromagnetischer Energie auf die wenigstens eine ausgewählte bindemittelbeschichtete Fläche, um das Bindemittel auszuhärten und die Baugruppe an dem Vorformling zu befestigen.

87. Verfahren nach Anspruch 76, ferner umfassend die folgenden Schritte:
(l) Aufbringen eines anaeroben Bindemittels auf wenigstens eine ausgewählte Fläche des Vorformlings;
(m) Bewegen einer Unterbaugruppe in intimen Kontakt mit dem Vorformling an der wenigstens einen ausgewählten bindemittelbeschichteten Fläche; und;
(n) Inkontaktbringen des anaeroben Bindemittels mit einer Atmosphäre, welche die Aushärtung des Bindemittels auf der wenigstens einen ausgewählten bindemittelbeschichteten Fläche fördert, um das Bindemittel auszuhärten und die Unterbaugruppe an dem Vorformling zu befestigen.

88. Verfahren nach Anspruch 76, ferner umfassend die folgenden Schritte:
(o) Aufbringen eines anaeroben Bindemittels auf wenigstens eine ausgewählte Fläche des Vorformlings;
(p) Bewegen einer Verstärkungsunterbaugruppe in intimen Kontakt mit dem Vorformling an der wenigstens einen ausgewählten bindemittelbeschichteten Fläche; und
(q) Inkontaktbringen des anaeroben Bindemittels mit einer Atmosphäre, welche die Aushärtung des Bindemittels auf der wenigstens einen ausgewählten bindemittelbeschichteten Fläche fördert, um das Bindemittel auszuhärten und die Unterbaugruppe an dem Vorformling zu befestigen.

89. Verfahren nach Anspruch 1, wobei das anaerobe Bindemittel ein oder mehrere Harze, ein oder mehrere Monomere, ein oder mehrere Hydroperoxide, einen oder mehrere Initiatoren und einen oder mehrere Inhibitoren umfasst.

90. Verfahren nach Anspruch 89, wobei das anaerobe Bindemittel 15 Gew.-% bis 55 Gew.-% Epoxymethacrylatharz umfasst.

91. Verfahren nach Anspruch 89, wobei das anaerobe Bindemittel 45 Gew.-% bis 85 Gew.-% Monomere, ausgewählt aus Methacrylatmonomeren, mehrwertigen Alkoholen, Esteralkoholen oder einer Mischung davon, umfasst.

92. Verfahren nach Anspruch 89, wobei das anaerobe Bindemittel 0 Gew.-% bis 5 Gew.-% Hydroperoxide umfasst.

93. Verfahren nach Anspruch 89, wobei das anaerobe Bindemittel 0 Gew.-% bis 4 Gew.-% Beschleuniger umfasst.

94. Verfahren nach Anspruch 89, wobei das anaerobe Bindemittel 0 Gew.-% bis 0,1 Gew.-% Inhibitoren umfasst.

95. Verfahren nach Anspruch 53, ferner umfassend den folgenden Schritt:
(e1) Aufbringen eines Schleiers auf eine Seite der Matte aus Faserverstärkungsmaterial.

96. Verfahren nach Anspruch 53, ferner umfassend den folgenden Schritt:
(e2) Aufbringen eines Schleiers auf beide Seiten der Matte aus Verstärkungsmaterial.

## Revendications

1. Procédé de fabrication d'une préforme d'articles moulés renforcés par des fibres comprenant des étapes consistant à :
(a) appliquer une couche d'un matériau renfermant des fibres de renfort sur une surface d'un moule de préforme ayant une configuration correspondant à au moins une partie d'un article moulé,
(b) ajouter une composition renfermant un liant anaérobie au matériau de renfort de sorte que les fibres soient au moins partiellement revêtues,
**caractérisé en ce qu'**
au cours des étapes (a) et (b) les interstices entre les fils restent ouverts, et
(c) le liant anaérobie est mis en contact avec une atmosphère d'au moins un gaz inerte qui favorise la polymérisation du liant.

2. Procédé conforme à la revendication 1,
selon lequel la composition de liant anaérobie est ajoutée au matériau avant l'application du matériau sur la surface du moule de préforme.

3. Procédé conforme à la revendication 1,
selon lequel la préforme comporte un écran ayant une forme adaptée à celle de l'article à mouler.

4. Procédé conforme à la revendication 1,
selon lequel le matériau renferme des fibres de renfort opaques à un rayonnement électromagnétique ou non adaptées pour être utilisées avec un tel rayonnement.

5. Procédé conforme à la revendication 1,
selon lequel le matériau renferme des fibres de carbone.

6. Procédé conforme à la revendication 1,
selon lequel le matériau renferme des fibres d'aramide.

7. Procédé conforme à la revendication 1,
selon lequel le matériau renferme des fibres mélangées d'au moins deux matériaux.

8. Procédé conforme à la revendication 7,
selon lequel les fibres mélangées renferment du verre.

9. Procédé conforme à la revendication 7,
selon lequel les fibres mélangées renferment une résine formant matrice.

10. Procédé conforme à la revendication 1,
selon lequel lors de l'étape (a) une couche de matériau renfermant des fibres de renfort est appliquée sur la surface d'un moule et lors de l'étape (b) une composition de liant est ajoutée au matériau, cette composition renfermant un composé anaérobie et un composant polymérisable par rayonnement électromagnétique ou un composé polymérisable thermiquement et lors de l'étape (c) la composition de liant est mise en contact avec une atmosphère, et des étapes (d) ou (e) sont mises en oeuvre :
- l'étape (d) comprenant l'exposition de la composition de liant à un rayonnement électromagnétique qui favorise la polymérisation du composé polymérisable par radiation électromagnétique et,
- l'étape (e) comprenant l'exposition de la composition de liant à une énergie thermique qui favorise la polymérisation du composant polimérisable thermiquement.

11. Procédé conforme à la revendication 10,
selon lequel l'étape (d) est mise en oeuvre avant l'étape (c).

12. Procédé conforme à la revendication 10,
selon lequel l'étape (e) est mise en oeuvre avant l'étape (c).

13. Procédé conforme à la revendication 11,
comprenant en outre une étape consistant à :
(f) mettre en forme le matériau de renfort selon une forme tridimensionnelle correspondant à au moins une partie d'un article moulé, l'étape (e) étant mise en oeuvre entre l'étape (c) et l'étape (d).

14. Procédé conforme à la revendication 10,
selon lequel la composition de liant est ajoutée au matériau de renfort avant l'application du matériau de renfort sur la surface du moule.

15. Procédé conforme à la revendication 10,
selon lequel la surface du moule a une forme se conformant à celle de l'article à mouler.

16. Procédé conforme à la revendication 10,
selon lequel le matériau de renfort renferme des fibres opaques au rayonnement électromagnétique.

17. Procédé conforme à la revendication 10,
selon lequel le matériau de renfort renferme des fibres de carbone.

18. Procédé conforme à la revendication 10,
selon lequel le matériau de renfort renferme des fibres d'aramide.

19. Procédé conforme à la revendication 10,
selon lequel le matériau renferme des fibres mélangées d'au moins deux matériaux.

20. Procédé conforme à la revendication 19,
selon lequel les fibres mélangées renferment du verre.

21. Procédé conforme à la revendication 19,
selon lequel les fibres mélangées renferment une résine formant matrice.

22. Procédé conforme à l'une des revendications 10 à 21,
selon lequel lors de l'étape (b) une composition de liant est ajoutée au matériau, cette composition renfermant un composé polymérisable thermiquement, lors de l'étape (e) la composition de liant étant chauffée à une température favorisant la polymérisation du composé polymérisable thermiquement.

23. Procédé conforme à la revendication 22,
selon lequel l'étape (e) est mise en oeuvre avant l'étape (d).

24. Procédé conforme à la revendication 22,
selon lequel l'étape (e) est mise en oeuvre avant l'étape (c).

25. Procédé conforme à la revendication 22,
selon lequel l'étape (d) est mise en oeuvre avant l'étape (e).

26. Procédé conforme à la revendication 22,
selon lequel l'étape (d) est mise en oeuvre avant l'étape (c).

27. Procédé conforme à la revendication 22,
selon lequel l'étape (c) est mise en oeuvre avant l'étape (e).

28. Procédé conforme à la revendication 22,
selon lequel l'étape (c) est mise en oeuvre avant l'étape (d).

29. Procédé conforme à la revendication 22,
comprenant en outre une étape consistant à :
(f) mettre en forme le matériau de renfort selon une forme tridimensionnelle correspondant à au moins une partie d'un article moulé, cette étape (f) étant effectuée à un instant choisi entre l'étape (e) et l'étape (d), entre l'étape (e) et l'étape (c) ou entre l'étape (d) et l'étape (c).

30. Procédé conforme à la revendication 22,
selon lequel la composition de liant est ajoutée au matériau de renfort savant l'application du matériau de renfort sur la surface du moule de préforme.

31. Procédé conforme à la revendication 22,
selon lequel la surface du moule a une forme se conformant à celle de l'article à mouler.

32. Procédé conforme à la revendication 22,
selon lequel le matériau renferme des fibres de renfort qui sont opaques au rayonnement électromagnétique.

33. Procédé conforme à la revendication 22,
selon lequel le matériau renferme des fibres de renfort en carbone.

34. Procédé conforme à la revendication 22,
selon lequel le matériau renferme des fibres de renfort en aramide.

35. Procédé conforme à la revendication 22,
selon lequel le matériau renferme des fibres mélangées d'au moins deux matériaux.

36. Procédé conforme à la revendication 35,
selon lequel les fibres mélangées renferment du verre.

37. Procédé conforme à la revendication 35,
selon lequel les fibres mélangées renferment une résine formant matrice.

38. Procédé de fabrication d'une préforme comprenant des étapes consistant à :
(a) déplacer un ensemble de tissus de matériau de renfort fibreux le long de chemins respectifs et guider les tissus superposés de sorte qu'ils se superposent parallèlement les uns aux autres dans un emplacement prédéfini et se déplacent parallèlement et en contact les uns avec les autres,
(b) appliquer un liant sur au moins une surface de chaque paire de surfaces en regard des tissus à l'avant de l'emplacement prédéfini, le liant renfermant un composé polymérisable sous l'action d'un rayonnement électromagnétique et un composé anaérobie,
(c) appliquer localement un rayonnement électromagnétique au niveau d'emplacements écartés sélectionnés des tissus parallèles en contact pour polymériser le liant polymérisable sous l'action d'un rayonnement électromagnétique au niveau des emplacements situés à distance, et coller ainsi les tissus les uns aux autres,
(d) découper une ébauche à partir des tissus collées,
(e) mettre en forme l'ébauche selon une forme tridimensionnelle correspondant à au moins une partie de la préforme, et
(f) mettre en contact l'ébauche avec une atmosphère d'au moins un gaz inerte qui favorise la polymérisation du liant anaérobie.

39. Procédé conforme à la revendication 38,
comprenant en outre une étape consistant à :
(g) appliquer un rayonnement électromagnétique sur l'ébauche pour polymériser la partie restante non polymérisée du liant polymérisable sous l'action d'un rayonnement électromagnétique.

40. Procédé conforme à la revendication 38,
selon lequel l'étape (e) de mise en forme consiste en outre à :
(e1) positionner l'ébauche entre une première et une seconde parties mises en forme d'un outil, ces parties ayant une forme permettant de reproduire la forme tridimensionnelle souhaitée de la préforme, et
(e2) comprimer les deux parties de l'outil l'une contre l'autre pour former l'ébauche, en mettant en contact l'ébauche avec une atmosphère qui favorise la polymérisation du liant anaérobie dans l'étape (f).

41. Procédé conforme à la revendication 38,
selon lequel l'étape (b) d'application du liant consiste en outre à :
(b1) pulvériser le liant sur au moins une surface de chaque paire de surfaces en regard des tissus à l'avant de l'emplacement prédéfini.

42. Procédé conforme à la revendication 38,
selon lequel l'étape (b) d'application du liant polymérisable sous l'action d'un rayonnement électromagnétique consiste en outre à :
(b2) mettre en contact les tissus de matériaux de renfort fibreux avec le liant polymérisable sous l'action d'un rayonnement électromagnétique alors que ces tissus sont dans leurs chemins respectifs tel que définis dans l'étape (a).

43. Procédé conforme à la revendication 38,
selon lequel l'étape (b) d'application du liant anaérobie consiste en outre à :
(b3) pulvériser le liant anaérobie sur les deux surfaces de chaque paire de surfaces en regard des tissus à l'avant de l'emplacement prédéfini.

44. Procédé conforme à la revendication 38,
comprenant en outre une étape consistant à :
(h) comprimer les tissus les uns contre les autres pour étaler le liant polymérisable sous l'action d'un rayonnement électromagnétique et/ou le liant anaérobie.

45. Procédé conforme à la revendication 38,
selon lequel le rayonnement électromagnétique de l'étape (c) est **caractérisé par** au moins une fréquence dans le domaine des microondes.

46. Procédé conforme à la revendication 38,
selon lequel l'étape (b) consiste en outre à :
(b5) appliquer un liant polymérisable sous l'action d'un rayonnement ultraviolet sur au moins l'une des surfaces en regard de chaque paire de surfaces en regard des tissus.

47. Procédé conforme à la revendication 38,
selon lequel le rayonnement électromagnétique de l'étape (c) est situé dans le domaine des ultraviolets.

48. Procédé conforme à la revendication 38,
selon lequel l'étape (c) consiste en outre à :
(c1) générer un rayonnement électromagnétique avec une source de rayonnement électromagnétique,
(c2) déplacer la source au travers des tissus, et
(c3) transmettre de façon périodique le rayonnement électromagnétique de la source vers les tissus.

49. Procédé conforme à la revendication 48,
selon lequel le rayonnement électromagnétique est **caractérisé par** au moins une fréquence située dans le domaine des microondes.

50. Procédé conforme à la revendication 48,
selon lequel le rayonnement électromagnétique comprend de l'énergie lumineuse à toutes les longueurs d'ondes utilisables pour initiation de la polymérisation.

51. Procédé conforme à la revendication 38,
comprenant en outre une étape consistant à :
(i) appliquer un liant polymérisable thermiquement sur au moins une surface de chaque paire de surfaces en regard des tissus.

52. Procédé conforme à l'une des revendications 38 à 51,
selon lequel l'étape (b) d'application du liant consiste en outre à :
(b6) appliquer un liant polymérisable sous l'action d'un rayonnement électromagnétique ou un liant polymérisable thermiquement sur une surface de chaque paire de surfaces en regard des tissus à l'avant de l'emplacement prédéfini et appliquer un liant anaérobie sur au moins l'autre surface de chaque paire de surfaces en regard des tissus.

53. Procédé de fabrication d'une préforme comprenant des étapes consistant à :
(a) appliquer un liant bicomposants sur un matelas de matériau de renfort en fibres, le liant bicomposants comprenant un premier composant de liant et un second composant de liant, le premier composant du liant étant un composé polymérisable sous l'action d'un rayonnement électromagnétique ou un composé polymérisable thermiquement, et le second composant du liant étant un composant anaérobie ;
(b) exposer le liant bicomposants à un rayonnement électromagnétique qui favorise la polymérisation du composant polymérisable sous l'action d'un rayonnement électromagnétique ou exposer le liant bicomposants à une énergie thermique qui favorise la polymérisation du composant polymérisable thermiquement,
(c) mettre en forme le matelas selon la forme souhaitée, et
(d) exposer le matelas à une atmosphère d'au moins un gaz inerte favorisant la polymérisation du composant anaérobie.

54. Procédé conforme à la revendication 53,
selon lequel le premier composant de liant est polymérisable par un rayonnement électromagnétique situé dans le domaine des ultraviolets.

55. Procédé conforme à la revendication 53,
selon lequel le premier composant du liant est polymérisable sous l'action d'un rayonnement électromagnétique situé dans le domaine visible.

56. Procédé conforme à la revendication 53,
selon lequel le premier composant du liant est polymérisable sous l'action d'un rayonnement électromagnétique ayant des longueurs d'ondes dans le domaine des microondes, et/ou d'un rayonnement électromagnétique ayant des longueurs d'ondes dans le domaine des infrarouges, et/ou d'un rayonnement laser, et/ou d'énergie thermique ou combinaison quelconque de tels éléments.

57. Procédé conforme à la revendication 53,
selon lequel l'étape (a) comprend en outre une étape consistant à :
(a1) appliquer le liant bicomposants dans la plage de 2% à 8% en poids du matériau de renfort.

58. Procédé conforme à la revendication 53,
selon l'étape (d) comprend en outre l'étape suivante consistant à :
(d1) exposer le matelas à une atmosphère favorisant la polymérisation du liant anaérobie jusqu'à ce qu'une préforme rigide soit obtenue.

59. Procédé conforme à la revendication 53,
comprenant en outre des étapes consistant à :
(e) positionner la préforme rigide dans un moule,
(f) appliquer un matériau plastique déformable sur la préforme,
(g) polymériser le matériau plastique.

60. Procédé conforme à la revendication 53,
selon lequel le second composant du liant renferme au moins une résine, au moins un monomère, au moins un initiateur et au moins un inhibiteur.

61. Procédé conforme à la revendication 53,
selon lequel le second composant du liant renferme en outre au moins un hydro-peroxyde.

62. Procédé conforme à la revendication 53,
selon lequel la résine renferme de l'époxy méthacrylate.

63. Procédé conforme à la revendication 60,
selon lequel les monomères sont choisis parmi les monomères suivants : monomères de méthacrylate, alcools polyhydriques, ester alcools ou leurs combinaisons quelconques.

64. Procédé conforme à la revendication 60,
selon lequel les monomères sont choisis parmi les monomères suivants : alkyl hydroxyls, béta carboxy éthyl acrylate, acide méthacrylique, acide acrylique, acide acrylique dimère, acide acrylique trimère, acide acrylique tétramère, acide acrylique pentamère, hydroxy éthyl métacrylate, hydroxy propyl méthacrylate, hydroxy éthyl acrylate, hydroxy propyl acrylate et hydroxy butyl acrylate.

65. Procédé conforme à la revendication 60,
selon lequel le second composant du liant bicomposants est constitué par deux composants, le premier composant renfermant les inhibiteurs et le second composant renfermant les initiateurs.

66. Procédé de fabrication d'une préforme ayant une structure tridimensionnelle rigide en utilisant un moule séparable comprenant une première partie de moule perforée et une seconde partie de moule de compression, les parties de moule, lorsqu'elles sont refermées l'une sur l'autre, définissant la forme tridimensionnelle souhaitée de la préforme et comprenant des surfaces internes positionnées angulairement l'une par rapport à l'autre en formant des coins internes et externes comprenant des étapes consistant à :
(a) découper des fibres en un matériau de renfort,
(b) propulser les fibres découpées sur la première partie du moule perforée en faisant simultanément circuler de l'air au travers de celle-ci pour diriger les fibres sur toutes ses surfaces sur une épaisseur prédéfinie,
(c) appliquer un liant anaérobie sur les fibres découpées pour revêtir au moins partiellement les fibres avec le liant, sans remplir des interstices parmi les fibres,
(d) fermer les parties du moule séparables pour comprimer les fibres découpées revêtues de liant selon la forme tridimensionnelle souhaitée de la préforme entre la seconde partie du moule de pression et la première partie du moule perforée du moule fermé.
(e) appliquer au liant anaérobie une atmosphère d'au moins un gaz inerte pour favoriser la polymérisation du liant.

67. Procédé conforme à la revendication 66,
comprenant en outre une étape consistant à :
(f) faire tourner la première partie du moule au cours des étapes (b) et (c) de propulsion des fibres découpées et de pulvérisation d'un liant anaérobie pour garantir une couverture surfacique totale des surfaces internes de la première partie du moule.

68. Procédé conforme à la revendication 66,
selon lequel l'étape (b) d'application d'un liant anaérobie consiste en outre à :
(b1) pulvériser ce liant.

69. Procédé conforme à la revendication 68,
selon lequel l'étape (b1) de pulvérisation d'un liant anaérobie consiste en outre à :
(b2) pulvériser le liant simultanément au cours de l'étape (a) de propulsion des fibres découpées.

70. Procédé conforme à la revendication 66, selon lequel l'étape (a) de découpe de fibres de matériau de renfort consiste en outre à :
(a1) tirer une mèche de matériau de renfort à partir d'au moins une bobine, et
(a2) sectionner la mèche tirée en fibres courtes pour permettre leur propulsion.

71. Procédé conforme à la revendication 66, comprenant en outre des étapes consistant à :
(g) appliquer un liant polymérisable sous l'action de l'énergie électromagnétique sur au moins une zone sélectionnée de la préforme,
(h) déplacer un sous-ensemble de sorte qu'il vienne en contact intime avec la préforme sur la zone revêtue de liant sélectionnée, et
(i) irradier par de l'énergie électromagnétique la surface revêtue de liant sélectionnée pour polymériser le liant et fixer le sous-ensemble à la préforme.

72. Procédé conforme à la revendication 66,
comprenant en outre des étapes consistant à :
(g) appliquer un liant polymérisable sous l'action de l'énergie électromagnétique sur au moins une zone sélectionnée de la préforme,
(h) déplacer un sous-ensemble de renfort de sorte qu'ils viennent en contact intime avec la préforme au niveau de la zone revêtue de liant sélectionnée, et
(i) irradier par de l'énergie électromagnétique la zone revêtue de liant sélectionnée pour polymériser le liant et fixer le sous-ensemble à la préforme.

73. Procédé conforme à la revendication 66,
comprenant en outre des étapes consistant à :
(j) appliquer un liant anaérobie sur au moins une zone sélectionnée de la préforme,
(k) déplacer un sous-ensemble de sorte qu'il vienne en contact intime avec la préforme au niveau de la zone revêtue de liant sélectionnée, et
(l) mettre en contact le liant anaérobie avec une atmosphère qui favorise la polymérisation du liant sur la zone revêtue de liant sélectionnée pour polymériser le liant et fixer le sous-ensemble à la préforme.

74. Procédé conforme à la revendication 66,
selon lequel les étapes (c) et (e) de pulvérisation d'un liant et d'application d'une atmosphère favorisant la polymérisation du liant anaérobie consistent respectivement en outre à :
(c1) pulvériser un liant anaérobie sur les fibres découpées.

75. Procédé conforme à la revendication 66,
selon lequel le moule séparable renferme un matériau transmettant l'énergie électromagnétique, comprenant en outre les étapes consistant à :
(m) appliquer un liant polymérisable sous l'action de l'énergie électromagnétique sur les fibres découpées pour revêtir au moins partiellement les fibres avec le liant, le cas échéant sans remplir des interstices parmi les fibres,
(n) appliquer un rayonnement électromagnétique sur les fibres.

76. Procédé conforme à la revendication 10,
selon lequel les étapes (a) à (d) sont mises en oeuvres pour obtenir une préforme ayant une structure tridimensionnelle rigide.

77. Procédé conforme à la revendication 76,
selon lequel la composition de liant de l'étape (b) renferme en outre un composant de liant polymérisable sous l'action de la chaleur.

78. Procédé conforme à la revendication 76,
selon lequel les fibres déposées sur la partie du moule sont des fibres continues.

79. Procédé conforme à la revendication 76,
selon lequel les fibres déposées sur la partie de moule sont des fibres sectionnées.

80. Procédé conforme à la revendication 76,
selon lequel l'étape (a) et l'étape (b) sont mises en oeuvre simultanément.

81. Procédé conforme à la revendication 76,
selon lequel l'étape (c) est mise en oeuvre avant l'étape (d).

82. Procédé conforme à la revendication 76,
selon lequel l'étape (b) d'application de la composition de liant consiste en outre à :
(b1) pulvériser le liant.

83. Procédé conforme à la revendication 76,
comprenant en outre une étape consistant à :
(e1) déposer un voile sur la partie du moule, l'étape (e1) étant mise en oeuvre avant l'étape (a).

84. Procédé conforme à la revendication 76,
comprenant en outre une étape consistant à :
(e2) déposer un voile sur la partie du moule, l'étape (e2) étant mise en oeuvre après l'étape (b).

85. Procédé conforme à la revendication 76,
comprenant en outre des étapes consistant à :
(f) appliquer un liant polymérisable sous l'action de l'énergie électromagnétique sur au moins une zone sélectionnée de la préforme,
(g) déplacer un sous-ensemble de sorte qu'il vienne en contact intime avec la préforme au niveau de la zone revêtue de liant sélectionnée, et
(h) irradier par de l'énergie électromagnétique la zone revêtue de liant sélectionnée pour polymériser le liant et fixer le sous-ensemble à la préforme.

86. Procédé conforme à la revendication 76,
comprenant en outre des étapes consistant à :
(i) appliquer un liant polymérisable sous l'action de l'énergie électromagnétique sur au moins une zone choisie de la préforme,
(j) déplacer un sous-ensemble de renfort de sorte qu'il vienne en contact intime avec la préforme au niveau de la zone revêtue de liant sélectionnée, et
(k) irradier par de l'énergie électromagnétique la zone revêtue de liant sélectionnée pour polymériser le liant et fixer le sous-ensemble à la préforme.

87. Procédé conforme à la revendication 76,
comprenant en outre des étapes consistant à :
(l) appliquer un liant anaérobie sur au moins une zone sélectionnée de la préforme,
(m) déplacer un sous-ensemble de sorte qu'il vienne en contact intime avec la préforme au niveau de la zone revêtue de liant sélectionnée, et
(n) mettre en contact le liant anaérobie avec une atmosphère qui favorise la polymérisation du liant sur la zone revêtue de liant sélectionnée pour polymériser le liant et fixer le sous-ensemble à la préforme.

88. Procédé conforme à la revendication 76,
comprenant en outre des étapes consistant à :
(o) appliquer un liant anaérobie sur au moins une zone sélectionnée de la préforme,
(p) déplacer un sous-ensemble de renfort de sorte qu'il vienne en contact intime avec la préforme au niveau de la zone revêtue de liant sélectionnée, et
(q) mettre en contact le liant anaérobie avec une atmosphère qui favorise la polymérisation du liant sur la zone revêtue de liant sélectionnée pour polymériser le liant et fixer le sous-ensemble à la préforme.

89. Procédé conforme à la revendication 1,
selon lequel le liant anaérobie renferme au moins une résine, au moins un monomère, au moins un hydro peroxyde, au moins un initiateur et au moins un inhibiteur.

90. Procédé conforme à la revendication 89,
selon lequel le liant anaérobie renferme 15% en poids à 55% en poids de résine époxy méthacrylate.

91. Procédé conforme à la revendication 89,
selon lequel le liant anaérobie renferme 45% en poids à 85% en poids de monomères choisis parmi les monomères suivants : monomères de méthacrylate, alcools poly hydriques, ester alcools ou un mélange de tels monomères.

92. Procédé conforme à la revendication 89,
selon lequel le liant anaérobie renferme entre 0% en poids et 5% en poids d'hydro peroxydes.

93. Procédé conforme à la revendication 89,
selon lequel le liant anaérobie renferme entre 0% en poids et 4% en poids d'accélérateurs.

94. Procédé conforme à la revendication 89,
selon lequel le liant anaérobie renferme entre 0% et 0,1% en poids d'inhibiteurs.

95. Procédé conforme à la revendication 53,
comprenant en outre une étape consistant à :
(e1) appliquer un voile sur un côté du matelas de matériau de renfort en fibres.

96. Procédé conforme à la revendication 53,
comprenant en outre une étape consistant à :
(e2) appliquer un voile des deux côtés du matelas de matériau de renfort.
